# EUROPEAN PATENT APPLICATION

(11) **EP 4 447 514 A1**
(43) Date of publication of application: **16.10.2024**
(21) Application number: 23737023.4
(22) Date of filing: 04.01.2023
(51) Int. Cl.: H04W 12/08

(54) **DATA TRANSMISSION METHOD AND COMMUNICATION APPARATUS**

(30) Priority: 10.01.2022 CN 202210023778; 07.03.2022 CN 202210223845
(71) Applicant: Huawei Technologies Co., Ltd., Shenzhen, Guangdong 518129 (CN)
(72) Inventor: HU, Mengshi, Shenzhen, Guangdong 518129 (CN); MONTEMURRO, Michael, Shenzhen, Guangdong 518129 (CN); HAN, Xiao, Shenzhen, Guangdong 518129 (CN); DU, Rui, Shenzhen, Guangdong 518129 (CN); SUN, Li, Shenzhen, Guangdong 518129 (CN); LIU, Peng, Shenzhen, Guangdong 518129 (CN); YANG, Xun, Shenzhen, Guangdong 518129 (CN); NAREN, Gerile, Shenzhen, Guangdong 518129 (CN)
(74) Representative: Goddar, Heinz J.
(86) International application number: PCT/CN2023/070322
(87) International publication number: WO 2023/131159

(57) **Abstract**

Embodiments of this application provide a data transmission method and a communication apparatus. Embodiments of this application are applied to a wireless local area network system that supports various IEEE 802.11 protocols, such as 802. 1 The (EHT) or 802. 1 1bf series protocols. The method includes: An access point sends first indication information to a first station, where the first indication information indicates that the first station is accepted to obtain sensing information of a second station. The access point sends the sensing information to the first station, where the access point is a proxy of the first station, the proxy is configured to obtain the sensing information for the first station, the first station is a sensing by proxy requesting station, and the second station is a sensing by proxy responding station. According to the technical solutions, in embodiments of this application, when the access point becomes the proxy of the sensing by proxy requesting station, security of the sensing information of the sensing by proxy responding station can be ensured.

## Description

This application claims priorities to Chinese Patent Application No. 202210023778.9, filed with the China National Intellectual Property Administration on January 10, 2022 and entitled "DATA TRANSMISSION METHOD AND COMMUNICATION APPARATUS", and to Chinese Patent Application No. 202210223845.1, filed with the China National Intellectual Property Administration on March 7, 2022 and entitled "DATA TRANSMISSION METHOD AND COMMUNICATION APPARATUS", both of which are incorporated herein by reference in their entireties.

### TECHNICAL FIELD

Embodiments of this application relate to the field of communication technologies, and more specifically, to a data transmission method and a communication apparatus.

### BACKGROUND

A signal sent by a Wi-Fi device is usually received by another device only after being reflected, diffracted, and scattered by various obstacles. Therefore, a signal received by the another device is usually obtained by superimposing a plurality of signals. This facilitates sensing, by using a radio signal, a physical environment through which the signal passes, and therefore a sensing (sensing) technology is derived.

In a scenario in which an access point (access point, AP) separately establishes a sensing relationship with at least two stations (stations, STAs), a sensing by proxy requesting station (one of the stations) may directly obtain sensing information of a sensing by proxy responding station (the remaining station) through the AP. As a result, security of the sensing information of the sensing by proxy responding station cannot be ensured.

Therefore, how to ensure security of sensing information of a sensing by proxy responding station is an urgent technical problem to be resolved currently.

### SUMMARY

Embodiments of this application provide a data transmission method and a communication apparatus, to ensure security of sensing information of a sensing by proxy responding station when an access point becomes a proxy of a sensing by proxy requesting station.

According to a first aspect, a data transmission method is provided, including: An access point sends first indication information to a first station, where the first indication information indicates that the first station is accepted to obtain sensing information of a second station; and the access point sends the sensing information to the first station. The access point is a proxy of the first station, the proxy is configured to obtain the sensing information for the first station, the first station is a sensing by proxy requesting station, and the second station is a sensing by proxy responding station.

When the access point becomes the proxy of the sensing by proxy requesting station, in this embodiment of this application, the access point or the second station determines whether to accept the first station to obtain the sensing information of the second station, and the access point does not directly send the sensing information of the second station to the first station. Therefore, in this embodiment of this application, security of the sensing information of the second station can be ensured.

With reference to the first aspect, in some possible implementations of the first aspect, before the access point sends the first indication information to the first station, the method further includes: The access point sends first request information to the second station, where the first request information is used to request to obtain the sensing information for the first station; and the access point receives second indication information sent by the second station, where the second indication information indicates that the second station accepts the first station to obtain the sensing information.

When the access point becomes a proxy of the sensing by proxy requesting station, in this embodiment of this application, the access point sends request information to the second station, so that the second station determines whether to accept the first station to obtain the sensing information of the second station. Therefore, in this embodiment of this application, a determining capability is provided to the second station, so that security of the sensing information of the second station can be ensured.

With reference to the first aspect, in some possible implementations of the first aspect, the first request information includes verification information of the first station, and the verification information indicates an identity of the first station.

The verification information of the first station is carried in the first request information, so that in this embodiment of this application, the second station can determine whether the first station is a trusted station of the second station, thereby helping determine whether to accept the first station to obtain the sensing information of the second station.

With reference to the first aspect, in some possible implementations of the first aspect, the method further includes: The access point receives first information sent by the second station, where the first information indicates that the first station is a trusted station of the second station; and the access point sends the first information to the first station.

In this embodiment of this application, after the second station accepts the first station to obtain the sensing information of the second station, the second station sends the first information to the first station, so that the first station adds the first information to the request information when requesting the sensing information of the second station again, and the second station or the access point determines to accept the first station to obtain the sensing information of the second station.

With reference to the first aspect, in some possible implementations of the first aspect, before the access point sends the first request information to the second station, the method further includes: The access point determines that the sensing information is first-type sensing information, where the first-type sensing information is sensing information that needs to be authorized by the second station; and/or the access point determines that the first station is a first-type station, where the first-type station is a station that needs to be authorized by the second station.

The sensing information and/or the first stations are classified, so that in this embodiment of this application, the access point sends the first request information to the second station only when it is determined that the sensing information and/or the first station are/is of a type of requiring authorization. Therefore, in this embodiment of this application, a sensing by proxy procedure can be simplified.

With reference to the first aspect, in some possible implementations of the first aspect, before the access point sends the first indication information to the first station, the method further includes: The access point receives third indication information sent by the second station, where the third indication information indicates that the second station accepts any station to obtain the sensing information.

The second station sends the third indication information to the access point, and the access point may determine whether the second station supports any station in obtaining the sensing information of the second station. Therefore, in this embodiment of this application, it can be determined, based on the third indication information, whether the sensing information of the second station can be sent to the first station. This can avoid sending the request information to the second station to obtain permission or authorization of the second station.

With reference to the first aspect, in some possible implementations of the first aspect, before the access point sends the first indication information to the first station, the method further includes: The access point determines that the sensing information is second-type sensing information, where the second-type sensing information is sensing information that does not need to be authorized by the second station; and/or the access point determines that the first station is a second-type station, where the second-type station is a station that does not need to be authorized by the second station.

The sensing information and/or the first stations are classified, so that in this embodiment of this application, there is no need to poll whether transmission can be performed for all "sensing information or first stations". For the sensing information that can be directly transmitted or the first station that can perform direct transmission, the access point may directly transmit the sensing information or the first station. This can simplify a sensing by proxy procedure.

With reference to the first aspect, in some possible implementations of the first aspect, after the access point sends the sensing information to the first station, the method further includes: The access point determines that a third station is a trusted station of the first station; and the access point sends the sensing information to the third station, where the access point is a proxy of the third station, the proxy is configured to obtain the sensing information for the third station, and the third station is a sensing by proxy requesting station.

According to the foregoing technical solution, in this embodiment of this application, the sensing information of the second station can be sent to the trusted sensing by proxy requesting station of the first station. This can simplify a proxy procedure in which the access point obtains the sensing information of the second station for the third station.

With reference to the first aspect, in some possible implementations of the first aspect, that the access point determines that a third station is a trusted station of the first station includes: The access point sends first polling information to the first station, where the first polling information is used to poll whether the third station is the trusted station of the first station; and the access point receives fourth indication information sent by the first station, where the fourth indication information indicates that the third station is the trusted station of the first station.

With reference to the first aspect, in some possible implementations of the first aspect, after the access point sends the sensing information to the first station, the method further includes: The access point determines that a fourth station is a trusted station of the second station; and the access point sends sensing information of the fourth station to the first station, where the proxy is further configured to obtain the sensing information of the fourth station for the first station, and the fourth station is a sensing by proxy responding station.

According to the foregoing technical solution, in this embodiment of this application, the sensing information of the trusted sensing by proxy responding station of the second station can be sent to the first station. This can simplify a proxy procedure in which the access point obtains the sensing information of the fourth station for the first station.

With reference to the first aspect, in some possible implementations of the first aspect, that the access point determines that a fourth station is a trusted station of the second station includes: The access point sends second polling information to the second station, where the second polling information is used to poll whether the fourth station is the trusted station of the second station; and the access point receives fifth indication information sent by the second station, where the fifth indication information indicates that the fourth station is the trusted station of the second station.

With reference to the first aspect, in some possible implementations of the first aspect, the method further includes: The access point sends a station list to the first station, where the station list includes at least one sensing by proxy responding station, and the station list includes the second station.

According to the foregoing technical solution, in this embodiment of this application, the first station can obtain sensing information of another sensing by proxy responding station through the access point.

With reference to the first aspect, in some possible implementations of the first aspect, the method further includes: The access point sends sensing information of any sensing by proxy responding station in the station list to the first station.

According to a second aspect, a data transmission method is provided, including: A second station receives first request information sent by an access point, where the first request information is used to request to obtain sensing information of the second station for a first station. The second station sends second indication information to the access point, where the second indication information indicates that the first station is accepted to obtain the sensing information. The access point is a proxy of the first station, the proxy is configured to obtain the sensing information for the first station, the first station is a sensing by proxy requesting station, and the second station is a sensing by proxy responding station.

With reference to the second aspect, in some possible implementations of the second aspect, the first request information includes verification information of the first station, and the verification information indicates an identity of the first station.

With reference to the second aspect, in some possible implementations of the second aspect, before the second station sends the second indication information to the access point, the method further includes: The second station determines, based on the verification information of the first station, that the first station is a trusted station of the second station.

With reference to the second aspect, in some possible implementations of the second aspect, before the second station sends the second indication information to the access point, the method further includes: The second station determines that the sensing information is first-type sensing information, where the first-type sensing information is sensing information that needs to be authorized by the second station; and/or the second station determines that the first station is a first-type station, where the first-type station is a requesting station that needs to be authorized by the second station.

With reference to the second aspect, in some possible implementations of the second aspect, before the second station sends the second indication information to the access point, the method further includes: The second station receives sixth indication information sent by a station management entity of the second station, where the sixth indication information indicates that the first station is accepted to obtain the sensing information.

With reference to the second aspect, in some possible implementations of the second aspect, before the second station sends the second indication information to the access point, the method further includes: The second station determines that the sensing information is second-type sensing information, where the second-type sensing information is sensing information that does not need to be authorized by the second station; and/or the second station determines that the first station is a second-type station, where the second-type station is a requesting station that does not need to be authorized by the second station.

With reference to the second aspect, in some possible implementations of the second aspect, the method further includes: The second station sends first information to the access point, where the first information indicates that the first station is the trusted station of the second station.

With reference to the second aspect, in some possible implementations of the second aspect, the method further includes: The second station receives second polling information sent by the access point, where the second polling information is used to poll whether a fourth station is a trusted station of the second station; and the second station sends fifth indication information to the access point, where the fifth indication information indicates that the fourth station is the trusted station of the second station.

According to a third aspect, a communication apparatus is provided, including: a transceiver unit, configured to send first indication information to a first station, where the first indication information indicates that the first station is accepted to obtain sensing information of a second station. The transceiver unit is further configured to send the sensing information to the first station. The communication apparatus is a proxy of the first station, the proxy is configured to obtain the sensing information for the first station, the first station is a sensing by proxy requesting station, and the second station is a sensing by proxy responding station.

With reference to the third aspect, in some possible implementations of the third aspect, the transceiver unit is further configured to send first request information to the second station, where the first request information is used to request to obtain the sensing information for the first station. The transceiver unit is further configured to receive second indication information sent by the second station, where the second indication information indicates that the second station accepts the first station to obtain the sensing information.

With reference to the third aspect, in some possible implementations of the third aspect, the first request information includes verification information of the first station, and the verification information indicates an identity of the first station.

With reference to the third aspect, in some possible implementations of the third aspect, the transceiver unit is further configured to receive first information sent by the second station, where the first information indicates that the first station is a trusted station of the second station. The transceiver unit is further configured to send the first information to the first station.

With reference to the third aspect, in some possible implementations of the third aspect, the apparatus further includes a determining unit. The determining unit is configured to determine that the sensing information is first-type sensing information, where the first-type sensing information is sensing information that needs to be authorized by the second station; and/or the determining unit is configured to determine that the first station is a first-type station, where the first-type station is a station that needs to be authorized by the second station.

With reference to the third aspect, in some possible implementations of the third aspect, the transceiver unit is further configured to receive third indication information sent by the second station, where the third indication information indicates that the second station accepts any station to obtain the sensing information.

With reference to the third aspect, in some possible implementations of the third aspect, the apparatus further includes a determining unit. The determining unit is configured to determine that the sensing information is second-type sensing information, where the second-type sensing information is sensing information that does not need to be authorized by the second station; and/or the determining unit is configured to determine that the first station is a second-type station, where the second-type station is a station that does not need to be authorized by the second station.

With reference to the third aspect, in some possible implementations of the third aspect, the apparatus further includes the determining unit. The determining unit is configured to determine that a third station is a trusted station of the first station. The transceiver unit is further configured to send the sensing information to the third station. The apparatus is a proxy of the third station, the proxy is configured to obtain the sensing information for the third station, and the third station is a sensing by proxy requesting station.

With reference to the third aspect, in some possible implementations of the third aspect, the transceiver unit is further configured to send first polling information to the first station, where the first polling information is used to poll whether the third station is the trusted station of the first station. The transceiver unit is further configured to receive fourth indication information sent by the first station, where the fourth indication information indicates that the third station is the trusted station of the first station.

With reference to the third aspect, in some possible implementations of the third aspect, the apparatus further includes the determining unit. The determining unit is configured to determine that a fourth station is a trusted station of the second station. The transceiver unit is further configured to send sensing information of the fourth station to the first station. The proxy is further configured to obtain the sensing information of the fourth station for the first station, and the fourth station is a sensing by proxy responding station.

With reference to the third aspect, in some possible implementations of the third aspect, the transceiver unit is further configured to send second polling information to the second station, where the second polling information is used to poll whether the fourth station is the trusted station of the second station. The transceiver unit is further configured to receive fifth indication information sent by the second station, where the fifth indication information indicates that the fourth station is the trusted station of the second station.

With reference to the third aspect, in some possible implementations of the third aspect, the transceiver unit is further configured to send a station list to the first station, where the station list includes at least one sensing by proxy responding station, and the station list includes the second station.

With reference to the third aspect, in some possible implementations of the third aspect, the transceiver unit is further configured to send sensing information of any sensing by proxy responding station in the station list to the first station.

According to a fourth aspect, a communication apparatus is provided, including: a transceiver unit, configured to receive first request information sent by an access point, where the first request information is used to request to obtain sensing information of a second station for a first station. The transceiver unit is further configured to send second indication information to the access point, where the second indication information indicates that the first station is accepted to obtain the sensing information. The access point is a proxy of the first station, the proxy is configured to obtain the sensing information for the first station, the first station is a sensing by proxy requesting station, and the second station is a sensing by proxy responding station.

With reference to the fourth aspect, in some possible implementations of the fourth aspect, the first request information includes verification information of the first station, and the verification information indicates an identity of the first station.

With reference to the fourth aspect, in some possible implementations of the fourth aspect, the apparatus further includes a determining unit. The determining unit is configured to determine, based on the verification information of the first station, that the first station is a trusted station of the second station.

With reference to the fourth aspect, in some possible implementations of the fourth aspect, the apparatus further includes the determining unit. The determining unit is configured to determine that the sensing information is first-type sensing information, where the first-type sensing information is sensing information that needs to be authorized by the second station; and/or the determining unit is configured to determine that the first station is a first-type station, where the first-type station is a requesting station that needs to be authorized by the second station.

With reference to the fourth aspect, in some possible implementations of the fourth aspect, the transceiver unit is further configured to receive sixth indication information sent by a station management entity of the second station, where the sixth indication information indicates that the first station is accepted to obtain the sensing information.

With reference to the fourth aspect, in some possible implementations of the fourth aspect, the apparatus further includes a determining unit. The determining unit is configured to determine that the sensing information is second-type sensing information, where the second-type sensing information is sensing information that does not need to be authorized by the second station; and/or the determining unit is configured to determine that the first station is a second-type station, where the second-type station is a requesting station that does not need to be authorized by the second station.

With reference to the fourth aspect, in some possible implementations of the fourth aspect, the transceiver unit is further configured to send first information to the access point, where the first information indicates that the first station is the trusted station of the second station.

With reference to the fourth aspect, in some possible implementations of the fourth aspect, the transceiver unit is further configured to receive second polling information sent by the access point, where the second polling information is used to poll whether a fourth station is a trusted station of the second station. The transceiver unit is further configured to send fifth indication information to the access point, where the fifth indication information indicates that the fourth station is the trusted station of the second station.

According to a fifth aspect, a communication apparatus is provided, including a processor. The processor is coupled to a memory, the memory is configured to store a computer program or instructions, and the processor is configured to execute the computer program or the instructions in the memory, so that the method in any one of the first aspect or the possible implementations of the first aspect is performed, or the method in any one of the second aspect or the possible implementations of the second aspect is performed.

According to a sixth aspect, a chip system is provided. The chip system includes a logic circuit and a communication interface. The communication interface or the logic circuit is configured to perform the method in any one of the first aspect or the possible implementations of the first aspect, or perform the method in any one of the second aspect or the possible implementations of the second aspect.

According to a seventh aspect, a communication system is provided. The communication system includes a communication apparatus on an access point and a communication apparatus on a station. The communication apparatus on the access point is configured to perform the method in any one of the first aspect or the possible implementations of the first aspect. The communication apparatus on the station is configured to perform the method in any one of the second aspect or the possible implementations of the second aspect.

According to an eighth aspect, a computer-readable storage medium is provided, and stores a computer program or instructions. The computer program or the instructions are used to implement the method in any one of the first aspect or the possible implementations of the first aspect, or are used to implement the method in any one of the second aspect or the possible implementations of the second aspect.

According to a ninth aspect, a computer program product is provided. When the computer program product runs on a computer, the computer is enabled to perform the method in any one of the first aspect or the possible implementations of the first aspect, or perform the method in any one of the second aspect or the possible implementations of the second aspect.

According to a tenth aspect, a data transmission method is provided, including: A second station receives key information, corresponding to a first key, from a first station, where the key information is used to verify an identity of the first station, the first station is a sensing by proxy requesting station, and the second station is a sensing by proxy responding station. The second station sends, to the first station, confirmation information determined based on the first key, where the confirmation information indicates that the second station confirms the identity of the first station.

The first station sends, to the second station, the key information for verifying the identity of the first station, and the second station verifies the key information based on the first key. After the verification succeeds, the first station can directly exchange information with the second station in this embodiment of this application. For example, the first station directly obtains sensing information of the second station or the like. After the verification succeeds, information security in a process of information exchange between the first station and the second station can be ensured in this embodiment of this application.

With reference to the tenth aspect, in some possible implementations of the tenth aspect, the first key includes at least one of the following: a first public key, a second public key, or a first symmetric key. The first public key corresponds to the first station, the second public key corresponds to the second station, and the first symmetric key corresponds to the first station and the second station.

With reference to the tenth aspect, in some possible implementations of the tenth aspect, before the second station receives the key information, corresponding to the first key, from the first station, the method further includes: The second station receives a first public key or a first symmetric key from an access point. The access point is a proxy of the first station, and the proxy is configured to obtain sensing information of the second station for the first station.

The first station sends the first public key or the first symmetric key to the second station through the access point. The second station may verify, based on the first public key or the first symmetric key, the key information corresponding to the first public key or the first symmetric key, to verify the identity of the first station. After the verification succeeds, the first station can directly exchange information with the second station in this embodiment of this application. For example, the first station directly obtains the sensing information of the second station or the like. After the verification succeeds, the information security in the process of information exchange between the first station and the second station can be ensured in this embodiment of this application.

With reference to the tenth aspect, in some possible implementations of the tenth aspect, the method further includes: The second station sends a second public key to the access point. The access point is the proxy of the first station, and the proxy is configured to obtain the sensing information of the second station for the first station.

Optionally, the second station sends the second public key to the first station before or after receiving the key information, corresponding to the first key, from the first station. Therefore, if the first station generates the corresponding key information based on the second public key, the second station sends the second public key before receiving the key information; or if the first station generates the corresponding key information based on the first public key, the second station may send the second public key after receiving the key information.

With reference to the tenth aspect, in some possible implementations of the tenth aspect, after the second station sends, to the first station, the confirmation information determined based on the first key, the method further includes: The second station sends the second key to the first station.

Specifically, the second station generates the second key. If the second key includes a public key and a private key, the second station may send the public key in the second key to the first station, so that in a process of subsequent information exchange between the first station and the second station, the first station may indicate the identity to the second station based on the public key in the second key. If the second key includes a symmetric key #2, the second station may send the symmetric key #2 to the first station, so that in a process of subsequent information exchange between the first station and the second station, the first station may indicate the identity to the second station based on the symmetric key #2. Therefore, in this embodiment of this application, the information security in the process of information exchange between the first station and the second station can be further ensured.

With reference to the tenth aspect, in some possible implementations of the tenth aspect, after the second station sends, to the first station, the confirmation information determined based on the first key, the method further includes: The second station receives the second key from the first station.

Specifically, the first station generates the second key. If the second key includes a public key and a private key, the first station may send the public key in the second key to the second station, so that in a process of subsequent information exchange between the first station and the second station, the first station may indicate the identity to the second station based on the public key in the second key. If the second key includes a symmetric key #2, the first station may send the symmetric key #2 to the first station, so that in a process of subsequent information exchange between the first station and the second station, the first station may indicate the identity to the second station based on the symmetric key #2. Therefore, in this embodiment of this application, the information security in the process of information exchange between the first station and the second station can be further ensured.

With reference to the tenth aspect, in some possible implementations of the tenth aspect, the second key includes a second symmetric key.

According to an eleventh aspect, a data transmission method is provided, including: A first station sends key information corresponding to a first key to a second station, where the key information is used to verify an identity of the first station, the first station is a sensing by proxy requesting station, and the second station is a sensing by proxy responding station. The first station receives, from the second station, confirmation information determined based on the first key, where the confirmation information indicates that the second station confirms the identity of the first station.

With reference to the eleventh aspect, in some possible implementations of the eleventh aspect, the first key includes at least one of the following: a first public key, a second public key, or a first symmetric key. The first public key corresponds to the first station, the second public key corresponds to the second station, and the first symmetric key corresponds to the first station and the second station.

With reference to the eleventh aspect, in some possible implementations of the eleventh aspect, the method further includes: The first station receives a second public key from an access point. The access point is a proxy of the first station, and the proxy is configured to obtain sensing information of the second station for the first station.

With reference to the eleventh aspect, in some possible implementations of the eleventh aspect, before the first station sends the key information corresponding to the first key to the second station, the method further includes: The first station sends a first symmetric key or a first public key to the access point. The access point is the proxy of the first station, and the proxy is configured to obtain the sensing information of the second station for the first station.

With reference to the eleventh aspect, in some possible implementations of the eleventh aspect, after the first station receives the confirmation information sent by the second station, the method further includes: The first station sends a second key to the second station.

With reference to the eleventh aspect, in some possible implementations of the eleventh aspect, after the first station receives the confirmation information sent by the second station, the method further includes: The first station receives a second key from the second station.

With reference to the eleventh aspect, in some possible implementations of the eleventh aspect, the second key includes a second symmetric key.

According to a twelfth aspect, a communication apparatus is provided, including: a transceiver unit, configured to receive key information, corresponding to a first key, from a first station, where the key information is used to verify an identity of the first station. The transceiver unit is further configured to send, to the first station, confirmation information determined based on the first key, where the confirmation information indicates that the communication apparatus confirms the identity of the first station, the first station is a sensing by proxy requesting station, and the communication apparatus is a sensing by proxy responding station.

With reference to the twelfth aspect, in some possible implementations of the twelfth aspect, the first key includes at least one of the following: a first public key, a second public key, or a first symmetric key. The first public key corresponds to the first station, the second public key corresponds to the communication apparatus, and the first symmetric key corresponds to the first station and the communication apparatus.

With reference to the twelfth aspect, in some possible implementations of the twelfth aspect, the transceiver unit is further configured to receive a first public key or a first symmetric key from an access point. The access point is a proxy of the first station, and the proxy is configured to obtain sensing information of the communication apparatus for the first station.

With reference to the twelfth aspect, in some possible implementations of the twelfth aspect, the transceiver unit is further configured to send a second public key to the access point. The access point is the proxy of the first station, and the proxy is configured to obtain the sensing information of the communication apparatus for the first station.

With reference to the twelfth aspect, in some possible implementations of the twelfth aspect, the transceiver unit is further configured to send a second key to the first station.

With reference to the twelfth aspect, in some possible implementations of the twelfth aspect, the transceiver unit is further configured to receive a second key from the first station.

With reference to the twelfth aspect, in some possible implementations of the twelfth aspect, the second key includes a second symmetric key.

According to a thirteenth aspect, a communication apparatus is provided, including: a transceiver unit, configured to send key information corresponding to a first key to a second station, where the key information is used to verify an identity of the communication apparatus, the communication apparatus is a sensing by proxy requesting station, and the second station is a sensing by proxy responding station. The transceiver unit is further configured to receive, from the second station, confirmation information determined based on the first key, where the confirmation information indicates that the second station confirms the identity of the communication apparatus.

With reference to the thirteenth aspect, in some possible implementations of the thirteenth aspect, the first key includes at least one of the following: a first public key, a second public key, or a first symmetric key. The first public key corresponds to the communication apparatus, the second public key corresponds to the second station, and the first symmetric key corresponds to the second station and the communication apparatus.

With reference to the thirteenth aspect, in some possible implementations of the thirteenth aspect, the transceiver unit is further configured to send a first public key or a first symmetric key to an access point. The access point is a proxy of the communication apparatus, and the proxy is configured to obtain sensing information of the second station for the communication apparatus.

With reference to the thirteenth aspect, in some possible implementations of the thirteenth aspect, the transceiver unit is further configured to receive a second public key from an access point. The access point is a proxy of the communication apparatus, and the proxy is configured to obtain sensing information of the second station for the communication apparatus.

With reference to the thirteenth aspect, in some possible implementations of the thirteenth aspect, the transceiver unit is further configured to send a second key to the second station.

With reference to the thirteenth aspect, in some possible implementations of the thirteenth aspect, the transceiver unit is further configured to receive a second key from the second station.

With reference to the thirteenth aspect, in some possible implementations of the thirteenth aspect, the second key includes a second symmetric key.

According to a fourteenth aspect, a communication apparatus is provided, including a processor. The processor is coupled to a memory, the memory is configured to store a computer program or instructions, and the processor is configured to execute the computer program or the instructions in the memory, so that the method in any one of the tenth aspect or the possible implementations of the tenth aspect is performed, or the method in any one of the eleventh aspect or the possible implementations of the eleventh aspect is performed.

According to a fifteenth aspect, a chip system is provided. The chip system includes a logic circuit and a communication interface. The communication interface is configured to perform the method in any one of the tenth aspect or the possible implementations of the tenth aspect, or perform the method in any one of the eleventh aspect or the possible implementations of the eleventh aspect.

According to a sixteenth aspect, a communication system is provided. The communication system includes a communication apparatus on a second station and a communication apparatus on a first station. The communication apparatus on the second station is configured to perform the method in any one of the tenth aspect or the possible implementations of the tenth aspect, or the communication apparatus on the first station is configured to perform the method in any one of the eleventh aspect or the possible implementations of the eleventh aspect.

According to a seventeenth aspect, a computer-readable storage medium is provided, and stores a computer program or instructions. The computer program or the instructions are used to implement the method in any one of the tenth aspect or the possible implementations of the tenth aspect, or are used to implement the method in any one of the eleventh aspect or the possible implementations of the eleventh aspect.

According to an eighteenth aspect, a computer program product is provided. When the computer program product runs on a computer, the computer is enabled to perform the method in any one of the tenth aspect or the possible implementations of the tenth aspect, or perform the method in any one of the eleventh aspect or the possible implementations of the eleventh aspect.

### BRIEF DESCRIPTION OF DRAWINGS

FIG. 1 is a schematic diagram of an application scenario according to this application;
FIG. 2 is a schematic flowchart of a data transmission method according to this application;
FIG. 3 is a schematic flowchart of another data transmission method according to this application;
FIG. 4 is a schematic diagram of interaction of a plurality of entities according to an embodiment of this application;
FIG. 5 is a schematic flowchart of still another data transmission method according to an embodiment of this application;
FIG. 6 is a schematic flowchart of yet another data transmission method according to an embodiment of this application;
FIG. 7 is a schematic flowchart of still yet another data transmission method according to an embodiment of this application;
FIG. 8 is a schematic flowchart of a further data transmission method according to an embodiment of this application;
FIG. 9 is a schematic flowchart of a still further data transmission method according to an embodiment of this application;
FIG. 10 is a schematic flowchart of a yet further data transmission method according to an embodiment of this application;
FIG. 11 is a structural block diagram of a communication apparatus according to this application;
FIG. 12 is a structural block diagram of another communication apparatus according to this application;
FIG. 13 is a structural block diagram of still another communication apparatus according to this application; and
FIG. 14 is a structural block diagram of yet another communication apparatus according to this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario. For example, the technical solutions provided in embodiments of this application are applicable to an IEEE 802.11 system standard, for example, the 802.11a/b/g standard, the 802.11n standard, the 802.11ac standard, the 802.11ax standard, or a next-generation standard, for example, the 802.1The standard or a further next-generation standard.

Although embodiments of this application are mainly described by using an example in which a WLAN network is deployed, especially a network to which the IEEE 802.11 system standard is applied, a person skilled in the art easily understands that various aspects in embodiments of this application may be extended to other networks that use various standards or protocols, for example, Bluetooth (Bluetooth), a high performance radio local area network (high performance radio local area network, HIPERLAN), a wide area network (wide area network, WAN), a personal area network (personal area network, PAN), and other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, a future 6th generation (6th generation, 6G) system, and a wireless local area network system such as an internet of things (internet of things, IoT) network or a vehicle-to-x (vehicle to x, V2X).

The foregoing communication systems applicable to this application are merely examples for descriptions, and the communication systems applicable to this application are not limited thereto. This is uniformly described herein, and details are not described below again.

A terminal in embodiments of this application may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future 6G network, a terminal device in a public land mobile network (public land mobile network, PLMN), or the like. This is not limited in embodiments of this application.

A network device in embodiments of this application may be a device configured to communicate with the terminal. The network device may be a base transceiver station (base transceiver station, BTS) in the global system for mobile communication (global system for mobile communication, GSM) or the code division multiple access (code division multiple access, CDMA) system, or may be a NodeB (NodeB, NB) in the wideband code division multiple access (wideband code division multiple access, WCDMA) system, or may be an evolved NodeB (evolved NodeB, eNB or eNodeB) in the LTE system, or may be a radio controller in a scenario of a cloud radio access network (cloud radio access network, CRAN). Alternatively, the network device may be a relay station, an access point, a vehicle-mounted device, a wearable device, a network device in the 5G network, a network device in the future 6G network, a network device in the PLMN network, or the like. This is not limited in embodiments of this application.

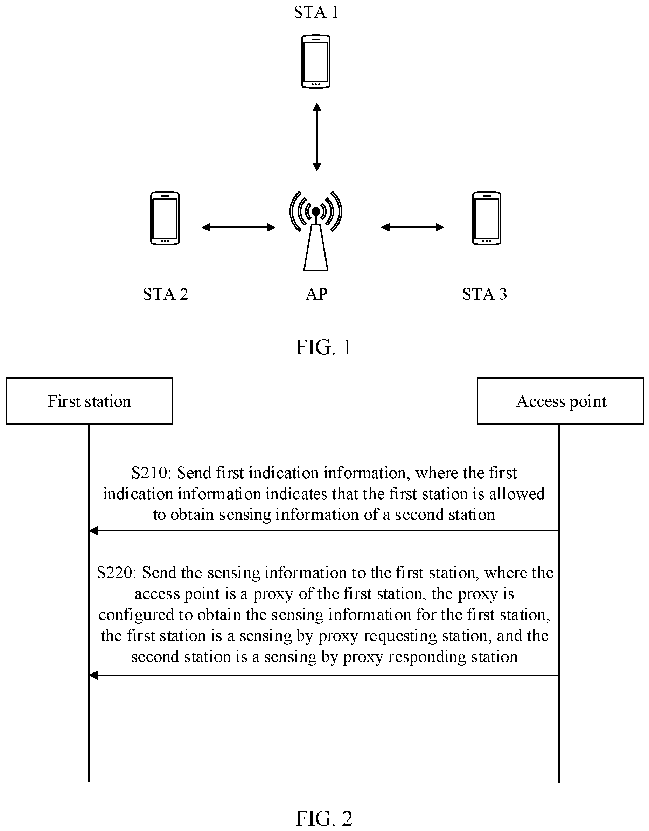

FIG. 1 is a schematic diagram of an application scenario according to this application. In FIG. 1, an access point (access point, AP) may be a communication server, a router, or a switch, or may be any one of the foregoing network devices. A station (station, STA) may be a mobile phone or a computer, or may be any one of the foregoing terminals. This is not limited in embodiments of this application.

It should be understood that the technical solutions in embodiments of this application are applicable to communication between an AP and one or more STAs, are applicable to mutual communication between APs, and are applicable to mutual communication between STAs. For ease of description, embodiments of this application are described merely by using an example in which an AP communicates with one or more STAs. However, this description manner does not have any limitation on an actual application scope of the technical solutions of embodiments of this application. A unified description is provided herein and details are not described below again.

The access point may be an access point used by a terminal (for example, a mobile phone) to access a wired (or wireless) network, and is mainly deployed at home, in a building, and in a campus. Atypical coverage radius is tens of meters to 100-odd meters. Certainly, the access point may alternatively be deployed outdoors. The access point is equivalent to a bridge that connects the wired network and the wireless network. The access point is mainly used to connect various wireless network clients together and then connect the wireless network to an Ethernet. Specifically, the access point may be a terminal device (for example, a mobile phone) or a network device (for example, a router) with a Wi-Fi chip. The access point may be a device that supports the 802.1 1be standard. Alternatively, the access point may be a device that supports a plurality of WLAN standards of the 802.11 family, such as 802.11ax, 802.11ac, 802.11n, 802.11g, 802.11b, 802.11a, and a next generation of 802.11be. The access point in this application may be an HE AP or an EHT AP, or may be an access point applicable to a future-generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support WLAN standards of the 802.11 family, such as 802.11ax, 802.11ac, 802.11n, 802.11g, 802.11b, 802.11a, and a next generation of 802.11be.

For example, the access point and the station may be devices used in the internet of vehicles, internet of things nodes, sensors, or the like in the internet of things (internet of things, IoT), smart cameras, smart remote controls, smart water or electricity meters, or the like in a smart home, sensors in a smart city, and the like.

It should be understood that the technical solutions in embodiments of this application are applicable to communication between an AP and one or more STAs, are applicable to mutual communication between APs, and are applicable to mutual communication between STAs. For ease of description, embodiments of this application are described merely by using an example in which an AP communicates with one or more STAs. However, this description manner does not have any limitation on an actual application scope of the technical solutions of embodiments of this application. A unified description is provided herein and details are not described below again.

The wireless communication system provided in embodiments of this application may be the WLAN or a cellular network. The method may be implemented by a communication device in the wireless communication system or a chip or a processor in the communication device. The communication device may be a wireless communication device that supports concurrent transmission performed on a plurality of links. For example, the communication device is referred to as a multi-link device (multi-link device) or a multi-band device (multi-band device). Compared with a device that supports only single-link transmission, the multi-link device has higher transmission efficiency and a higher throughput. The multi-link device includes one or more affiliated stations STAs (affiliated STAs). The affiliated STA is a logical station and may operate on one link. The affiliated station may be an AP or a non-AP STA. For ease of description, in this application, a multi-link device whose affiliated station is an AP may be referred to as a multi-link AP, a multi-link AP device, or an AP multi-link device (AP multi-link device). A multi-link device whose affiliated station is a non-AP STA may be referred to as a multi-link STA, a multi-link STA device, or a STA multi-link device (STA multi-link device).

Before the technical solutions in embodiments of this application are described, the following briefly describes related technical terms of the technical solutions in embodiments of this application.

First, a sensing (sensing) technology is described.

A signal sent by a Wi-Fi device is usually received by a terminal device after being reflected, diffracted, and scattered by various obstacles. Due to this phenomenon, an actually received signal usually obtained by superimposing a plurality of signals, that is, a channel environment may become complex. However, this facilitates sensing, by using a radio signal, a physical environment through which the signal passes. An ambient environment can be inferred and sensed by analyzing a radio signal affected by various obstacles, for example, channel state information (channel state information, CSI), to derive a sensing technology.

The sensing technology includes four roles: a sensing initiator (sensing initiator), a sensing responder (sensing responder), a sensing transmitter (sensing transmitter), and a sensing receiver (sensing receiver) and four steps: sensing session setup (sensing session setup), measurement setup (measurement setup), a measurement instance (measurement instance), measurement setup termination (measurement setup termination), and sensing session termination (sensing session termination).

Specifically, the sensing initiator is a station that initiates a sensing process; the sensing responder is a station that participates in the sensing process initiated by the sensing initiator; the sensing transmitter is a station that sends a physical layer protocol data unit (physical layer protocol data unit, PPDU) for sensing measurement in the sensing process; and the sensing receiver is a station that receives the PPDU sent by the sensing transmitter and performs sensing measurement in the sensing process. The sensing session setup indicates that a sensing session is set up between stations. Some related parameters can be exchanged here. The measurement setup is used by the sensing initiator and the sensing responder to exchange and unify parameters, attributes, or the like that need to be used in the sensing process, for example, parameters, such as a role that the sensing initiator is a sensing transmitter and/or a sensing receiver or the sensing responder is a sensing transmitter and/or sensing receiver, a measurement feedback type, and a sensing information type. The measurement instance is used for sensing measurement. One measurement instance allows a plurality of sensing responders to join. The measurement setup termination is used to terminate a measurement setup process corresponding to a sensing responder, and the sensing responder is not bound to corresponding measurement setup, but may still be in the sensing session. The sensing session termination indicates termination of the sensing session, and the station no longer participates in a process such as sensing measurement.

It should be understood that the sensing session is a protocol between two stations established by one sensing initiator and one sensing responder. One sensing initiator may set up sensing sessions with a plurality of sensing responders (but the sensing sessions still need to be set up one by one, for example, by using an orthogonal frequency division multiple access technology (orthogonal frequency division multiple access, OFDMA) or in a multi-user multiple-input multiple-output (multi-user multiple-input multiple-output, MU-MIMO) manner).

Second, a measurement instance is described.

Measurement instances are classified into two types: a trigger-based sensing measurement instance (trigger-based sensing measurement instance) and a non-trigger-based sensing measurement instance (non-trigger-based sensing measurement instance). For example, in a trigger-based sensing process, an AP is a sensing initiator, and a STA is a sensing responder; or in a non-trigger-based sensing process, a STA may be a sensing initiator, and an AP may be a sensing responder. It should be noted that a type of a measurement instance in a scenario shown in FIG. 1 is not specifically limited in embodiments of this application. Alternatively, a difference between trigger-based sensing and non-trigger-based sensing lies in that a trigger frame is used in a sensing measurement instance in trigger-based sensing, and no trigger frame is required in non-trigger-based sensing.

The measurement instance includes the following phases: a polling phase, a null data physical layer protocol data unit announcement sounding phase (null data physical layer protocol data unit announcement sounding phase), a trigger frame sounding phase (trigger frame sounding phase), and a reporting phase (reporting phase). In the polling phase, it is confirmed that a polled station can participate in measurement and feedback in a current measurement instance. In the null data physical layer protocol data unit announcement sounding phase, a sensing initiator notifies, through an NDPA, a corresponding sensing responder that the sensing initiator subsequently sends a null data physical layer protocol data unit (null data physical layer protocol data unit, NDP). In addition to notifying the sensing responder that needs to listen to the NDP, the NDPA further carries other configuration information.

The corresponding sensing responder measures the NDP sent by the sensing initiator to obtain channel information. In the trigger frame sounding phase, the sensing initiator uses a trigger frame (trigger frame, TF) to trigger the sensing responder to transmit the NDP, and the sensing initiator measures the NDP sent by the sensing responder to obtain channel information.

It should be understood that, in the schematic diagram of FIG. 1, communication between a STA 1 and an AP, communication between a STA 2 and an AP, or communication between a STA 3 and an AP may be the foregoing sensing process.

For ease of description, in embodiments of this application, the technical solutions in embodiments of this application are described by using an example in which communication between the STA 2 and the AP or communication between the STA 3 and the AP is the foregoing sensing process. However, communication between the STA 2 and the AP or communication between the STA 3 and the AP is communication of another type.

In the schematic diagram of FIG. 1, the STA 2 and the AP, and the STA 3 and the AP may separately or simultaneously perform the sensing process. The STA 1 sends a proxy request to the AP, requests the AP to serve as a proxy of the STA 1 to obtain sensing information obtained by the AP and STA 2 in the sensing process (or requests the AP to obtain sensing information of the STA 2), and/or requests the AP to serve as a proxy of the STA 1 to obtain sensing information obtained by the AP and STA 3 in the sensing process (or requests the AP to obtain sensing information of the STA 3).

It should be understood that the STA 1 is a requesting STA (requesting STA) or a sensing by proxy requesting station (sensing by proxy requesting STA, SBP requesting STA), and requests the AP to serve as the proxy of the STA 1 to obtain sensing information of another station.

When the AP becomes the proxy of the STA 1, the STA 1 easily obtains sensing information of another sensing station through the AP, for example, obtains the sensing information of the STA 2 and/or the STA 3 through the AP, and the STA 2 and/or the STA 3 cannot prevent the STA 1 from obtaining the sensing information of the STA 2 and/or the STA 3 through the AP. This poses a potential risk to security of the sensing information of the STA 2 and the STA 3.

In view of the foregoing technical problem, embodiments of this application provide a data transmission method, so that when an access point becomes a proxy of a sensing by proxy requesting station, security of sensing information of another sensing by proxy responding station can be ensured.

It should be understood that the sensing information includes but is not limited to CSI information, CSI change information, an object movement indication, beamforming, a channel impulse response (channel impulse response, CIR), and other information.

It should be noted that, in embodiments of this application, an initial initiator, namely the STA 1, is a non-initiator (non-initiator, which is referred to as a sensing request STA in this case), and then this process may also be a non-initiator sensing process. A unified description is provided herein and details are not described below again. In addition, an application range of a frequency band is not limited in embodiments of this application. For example, the frequency band may be sub-7 GHz, 60 GHz, or the like. A unified description is provided herein and details are not described below again.

FIG. 2 is a schematic flowchart of a data transmission method according to an embodiment of this application. The method includes the following steps.

S210: An access point sends first indication information to a first station, where the first indication information indicates that the first station is accepted to obtain sensing information of a second station.

Correspondingly, the first station receives the first indication information sent by the access point, and determines, based on the first indication information, that the sensing information of the second station can be obtained.

It should be understood that, in the step S210, the access point or the second station may determine that the first station is accepted to obtain the sensing information of the second station, and the access point notifies the first station of a determining result.

S220: The access point sends the sensing information to the first station, where the access point is a proxy of the first station, and the proxy is configured to obtain the sensing information for the first station.

Correspondingly, the first station receives the sensing information sent by the access point.

It should be understood that the first station may be referred to as a sensing by proxy requesting station, may be referred to as an initial initiator, or may be referred to as a requesting station; the second station may be referred to as a sensing by proxy responding station, or may be referred to as a sensing station; and the access point may be a proxy initiator of the first station, or may be the proxy of the first station.

For ease of description, in this embodiment of this application, a description is provided by using an example in which the first station is the sensing by proxy requesting station and the second station is the sensing by proxy responding station. However, this description manner has no limitation.

It should be further understood that, for the first station, the access point may be a responder, or may be a proxy initiator, and the second station may be a sensing by proxy responder. For the second station, the access point may be a sensing by proxy initiator, and the first station may also be an initial initiator.

It should be understood that the first station obtains the sensing information of the second station may be understood as that, the first station requests to obtain the sensing information between the access point and the second station, or the first station requests to obtain the sensing information of the second station. The two have similar or equivalent meanings. Therefore, that the first station requests to obtain the sensing information of the second station is equivalent to that the first station requests to obtain the sensing information between the access point and the second station. In other words, the sensing information of the second station may be understood as pure sensing information of the second station, or may be the sensing information between the second station and the access point. This is not limited in embodiments of this application.

For ease of description, in this embodiment of this application, a description is provided by using an example in which the first station obtains the sensing information of the second station. However, this description manner cannot be considered as abandoning the foregoing expression form in which the first station requests to obtain the sensing information between the access point and the second station.

It should be understood that the access point is the proxy (proxy) of the first station, which may be understood that the access point is a nominal proxy (which may be understood as a nominal proxy) of the first station, or the access point is a functional proxy (which may be understood as an actual proxy) of the first station.

Specifically, when the access point determines to send the sensing information of the second station to the first station, the access point is the functional proxy of the first station. When the access point determines that the sensing information of the second station cannot be sent to the first station, the access point is only the nominal proxy of the first station, and the access point cannot perform a proxy function of sending the sensing information of the second station to the first station.

A proxy relationship between the access point and the first station starts to be established when the first station sends proxy request information to the access point. The proxy request information is used to request the access point to become the proxy of the first station, to help the first station obtain the sensing information of the second station. Correspondingly, the access point sends feedback information to the first station, to respond to the proxy request information.

It should be understood that, in addition to indicating the access point to receive the proxy request information, the feedback information may further indicate the access point to become the proxy of the first station. For ease of description, in this embodiment of this application, an example in which the feedback information indicates the access point to become the proxy of the first station is used for description, but other functions are not excluded.

In an existing protocol, after becoming the proxy of the first station, the access point directly sends the sensing information of the second station to the first station. Consequently, security of the sensing information of the second station cannot be ensured. In the step S210 in this embodiment of this application, the first indication information sent by the access point may indicate that the first station can obtain the sensing information of the second station only after being accepted by the access point or the second station. The access point notifies the first station of the determining result, so that the first station determines whether the first station can obtain the sensing information of the second station.

Therefore, the access point needs to determine whether the sensing information of the second station can be sent to the first station. A specific determining manner includes but is not limited to: The access point polls the second station; the access point determines, based on a level of the sensing information requested by the first station to be obtained, whether the sensing information can be sent to the first station; the access point determines, based on whether the first station is a trusted station of the second station, whether the sensing information can be sent to the first station; or the like.

It should be understood that, in this embodiment of this application, the trusted station may be understood as a station that is accepted by the second station to obtain the sensing information of the second station. In other words, the trusted station may be understood as a station that has obtained the sensing information of the second station.

Optionally, the access point may send, to the first station, the first indication information indicating that the first station is rejected to obtain the sensing information of the second station.

Optionally, the access point may also refuse to become the proxy of the first station.

It should be understood that, in addition to requesting the access point to obtain the sensing information of the second station, the first station can further request the access point to obtain sensing information of another sensing by proxy responding station. Further, the first station can not only request to obtain the sensing information of the sensing by proxy responding station, but also request to obtain other information of the sensing by proxy responding station, for example, a medium access control (medium access control, MAC) address, an application identifier (application identifier, AID), a user identifier (user identifier, UID), a capability, and other information.

It should be understood that the access point may be the proxy of the first station, and may also be a proxy of another sensing by proxy requesting station, for example, a proxy of a third station.

It should be understood that, before the first station sends the proxy request information to the access point, the first station may first establish the following relationship with the access point: Preassociation security negotiation (preassociation security negotiation, PASN) is required for an unassociated station; and a robust security network (robust security network, RSN) is required for an associated station. In the foregoing process, specific mutual trust between the access point and the first station is established.

It should be noted that the sensing information of the second station may be obtained by the access point by performing sensing measurement with the second station after sending the first indication information to the first station, or may be obtained by the access point by performing sensing measurement with the second station before sending the first indication information to the first station. A sequence in which the access point obtains the sensing information of the second station is not specifically limited in this embodiment of this application. In other words, a sensing session between the access point and the second station is set up before the access point sends the sensing information of the second station to the first station, and a specific sequence is not limited.

It should be further noted that the access point serving as the proxy of the first station learns of a type of sensing information that needs to be obtained by the first station. This may occur from the proxy request information sent by the first station to the access point, or may occur in interaction after the first station is accepted by the second station. The entire may occur in any step before the step in which the access point sends the sensing information to the first station.

When the access point becomes the proxy of the sensing by proxy requesting station, in this embodiment of this application, the access point or the second station determines whether to accept the first station to obtain the sensing information of the second station, and the access point does not directly send the sensing information of the second station to the first station. Therefore, in this embodiment of this application, security of the sensing information of the second station can be ensured.

In an example, before the access point sends the first indication information to the first station, the method further includes:
S210#A: The access point receives indication information #A sent by the second station, where the indication information #A indicates that the second station accepts any station to obtain the sensing information.

Specifically, the access point determines, based on the indication information #A, that the second station accepts the first station to obtain the sensing information. Then, the access point sends, to the first station, the first indication information indicating that the first station is accepted to obtain the sensing information of the second station. The request for accepting the first station to obtain the sensing information is initiated by the second station. The any station includes the first station.

Optionally, the indication information #A in S210#A may indicate that any station is rejected to obtain the sensing information of the second station.

Specifically, the access point determines, based on the indication information #A, that the second station rejects the first station to obtain the sensing information. Then, the access point sends, to the first station, the first indication information indicating that the sensing information of the second station is refused to be obtained. Even if the access point is the proxy of the first station, the access point cannot send the sensing information of the second station to the first station. The request for rejecting the first station to obtain the sensing information is initiated by the second station. In this embodiment of this application, an independent determining capability of the second station is provided, so that security of the sensing information of the second station can be ensured.

Specifically, the second station may set the indication information #A to "support" or "not support", to indicate that any station is accepted or rejected to obtain the sensing information of the second station.

In an example, the indication information #A is carried in signaling or a frame of a physical layer protocol data unit (physical layer protocol data unit, PPDU), and the indication information #A is sent by the second station to the access point in an interaction process with the access point. The access point determines, based on the indication information #A, whether the sensing information of the second station can be sent to the first station.

It should be understood that the second station may indicate, to the access point based on the indication information #A sent to the access point, whether the second station supports participating in an SBP process or whether the second station supports serving as a sensing station in the SBP process. When the second station indicates, in the indication information #A, that any station is rejected to obtain the sensing information of the second station, the access point sends, to the first station based on the indication information #A, the first indication information that the first station is rejected to obtain the sensing information of the second station, to ensure security of the sensing information of the second station. Alternatively, when the second station indicates, in the indication information #A, that any station is accepted to obtain the sensing information of the second station, the access point sends the first indication information to the first station based on the indication information #A, and then sends the sensing information of the second station to the first station.

The second station sends the indication information #A to the access point, and the access point may determine whether the second station supports any station in obtaining the sensing information of the second station. Therefore, in this embodiment of this application, it can be determined, based on the indication information #A, whether the sensing information of the second station can be sent to the first station. This can avoid sending request information to the second station to obtain permission or authorization of the second station.

It should be understood that the indication information #A may be capability indication information or support indication information, to indicate, to the access point, whether the second station accepts any station to obtain the sensing information of the second station. Another name of the indication information #A is not specifically limited in embodiments of this application.

It should be understood that the indication information #A sent by the second station to the access point occurs before the access point sends the first indication information.

The following separately describes examples in which a second station accepts a first station to obtain sensing information and an access point accepts the first station to obtain the sensing information.

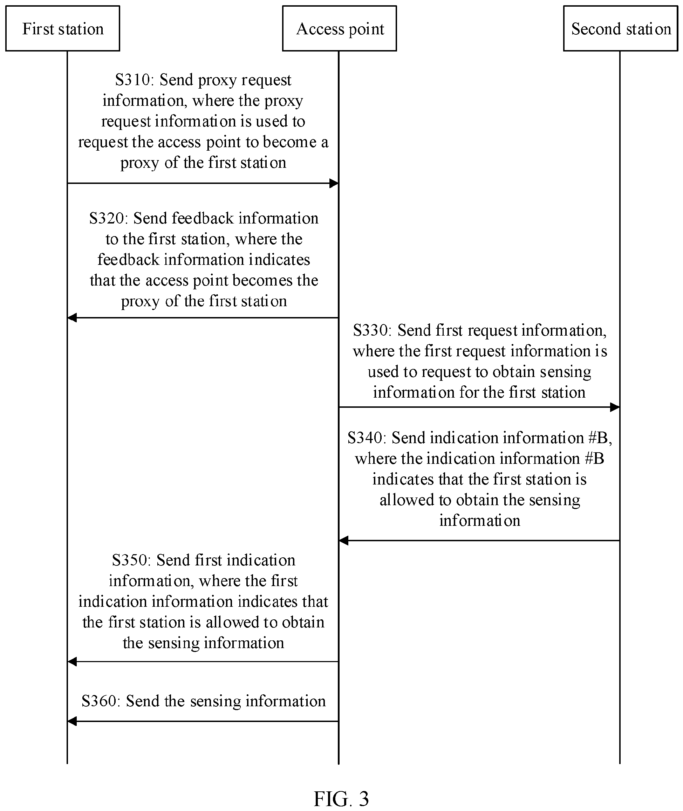

FIG. 3 shows another data transmission method according to an embodiment of this application. In this technical solution, the second station determines to accept the first station to obtain sensing information of the second station. The method includes the following steps.

S310: The first station sends proxy request information to the access point, where the proxy request information is used to request the access point to become a proxy of the first station.

Correspondingly, the access point receives the proxy request information sent by the first station.

The first station sends the proxy request information to the access point, to request the access point to become the proxy of the first station, to obtain the sensing information of the second station for the first station, and also obtain sensing information of another sensing by proxy responding station for the first station, for example, sensing information of a fourth station.

S320: The access point sends feedback information to the first station, where the feedback information indicates that the access point becomes the proxy of the first station.

Correspondingly, the first station receives the feedback information sent by the access point, and determines, based on the feedback information, that the access point becomes the proxy of the first station.

S330: The access point sends first request information to the second station, where the first request information is used to request to obtain sensing information for the first station.

Correspondingly, the second station receives the first request information sent by the access point.

It should be understood that the first request information in the step S330 may include verification information of the first station, and the verification information indicates an identity of the first station, and is used by the second station to determine whether the first station is a trusted or reliable station.

The verification information may include at least one of the following: a medium access control address (medium access control address, MAC ADDR), a station identifier (station identifier, STA ID), a service set identifier (service set identifier, SSID), a certificate (certificate), and the like. The verification information of the first station is carried in the first request information, so that in this embodiment of this application, the second station can determine whether the first station is a trusted station of the second station, thereby helping determine whether to accept the first station to obtain the sensing information of the second station.

S340: The second station sends indication information #B to the access point, where the indication information #B indicates that the second station accepts the first station to obtain the sensing information.

Correspondingly, the access point receives the indication information #B sent by the second station.

In an example, in S340#A, the second station receives indication information #C sent by a station management entity (station management entity, SME) of the second station (the SME is described below), where the indication information #C indicates that the first station is accepted to obtain the sensing information of the second station. Then, the second station sends the indication information #B to the access point, to indicate that the first station is accepted to obtain the sensing information of the second station. Therefore, the second station may send, to the first station based on determining of an upper layer or the SME, indication information indicating that the authorization is accepted. This can simplify a proxy procedure.

In another example, in S340#B, the second station receives indication information sent by an upper layer (for example, an application layer) of the second station, where the indication information indicates that the first station is accepted to obtain the sensing information of the second station. Then, the second station sends the indication information #B to the access point, to indicate that the first station is accepted to obtain the sensing information of the second station.

In still another example, in S340##A, the first request information includes the verification information of the first station, and the second station matches the verification information with verification information stored by an SME of the second station. If the verification information is consistent with the verification information stored by the SME, the second station sends, to the access point, the indication information #B indicating that the first station is accepted to obtain the sensing information of the second station. If the verification information is inconsistent with the verification information stored by the SME, the second station sends, to the access point, the indication information #B indicating that the first station is rejected to obtain the sensing information of the second station.

It should be understood that, on a premise that the first station and the second station trust with each other (or on a premise that a handshake (handshake) is established between the first station and the second station), the second station stores the verification information of the first station in the SME in advance. The second station determines, based on the verification information included in the first request information and the verification information stored in the SME, whether to accept the first station to obtain the sensing information. In this manner, in this embodiment of this application, security of the sensing information of the sensing by proxy responding station can be ensured.

It should be noted that the first request information may not carry the verification information of the first station, and the second station may determine, based on the indication information #C sent by the SME, to send the indication information #B to the access point. The first request information may alternatively carry the verification information of the first station. The second station may independently determine whether to accept the first station to obtain the sensing information, or may determine, by using the upper layer, whether to accept the first station to obtain the sensing information, and send the indication information #C to the second station by using the SME.

S350: The access point sends first indication information to the first station, where the first indication information indicates that the first station is accepted to obtain the sensing information.

Correspondingly, the first station receives the first indication information sent by the access point, and determines, based on the first indication information, that the first station can obtain the sensing information of the second station.

S360: The access point sends the sensing information to the first station.

Correspondingly, the first station receives the sensing information sent by the access point.

Specifically, the access point sends the first request information to the second station. The second station determines to accept the first station to obtain the sensing information of the second station, and sends the indication information #B to the access point. The access point determines, based on the indication information #B, that the second station accepts the first station to obtain the sensing information of the second station, and then sends the sensing information to the first station.

In the foregoing technical solution, the second station determines whether to accept the first station to obtain the sensing information of the second station. The access point sends the sensing information to the first station when accepted by the second station. The access point cannot send the sensing information to the first station when rejected by the second station. Therefore, in this embodiment of this application, security of the sensing information of the second station can be ensured.

In an example, the second station further sends first information to the access point, where the first information indicates that the first station is the trusted station of the second station. The first information may be understood as key information, and the key information may be understood as a pure key or encrypted information obtained through encryption of a key. Both may be referred to as the key information. The key may be a public key or a symmetric key, or may include another type of key. The first information may also be understood as other information. A specific name of the first information is not specifically limited in embodiments of this application.

In this embodiment of this application, after the second station accepts the first station to obtain the sensing information of the second station, the second station sends the first information to the first station, so that the first station adds the first information to the request information when requesting the sensing information of the second station again, and the second station or the access point determines to accept the first station to obtain the sensing information of the second station.

After receiving the first information sent by the second station, the access point sends the first information to the first station, so that when the first station requests to obtain the sensing information of the second station again, the first station may send the first information to the second station through the access point, to obtain permission of the second station.

It should be understood that the second station may send the first information to the access point after the second station sends the indication information #B or before the access point sends the sensing information. A sequence of the step is not specifically limited in embodiments of this application.

When the access point becomes a proxy of a sensing by proxy requesting station, in this embodiment of this application, the access point sends the request information to the second station, so that the second station determines whether to accept the first station to obtain the sensing information of the second station. Therefore, in this embodiment of this application, a determining capability is provided to the second station, so that security of the sensing information of the second station can be ensured.

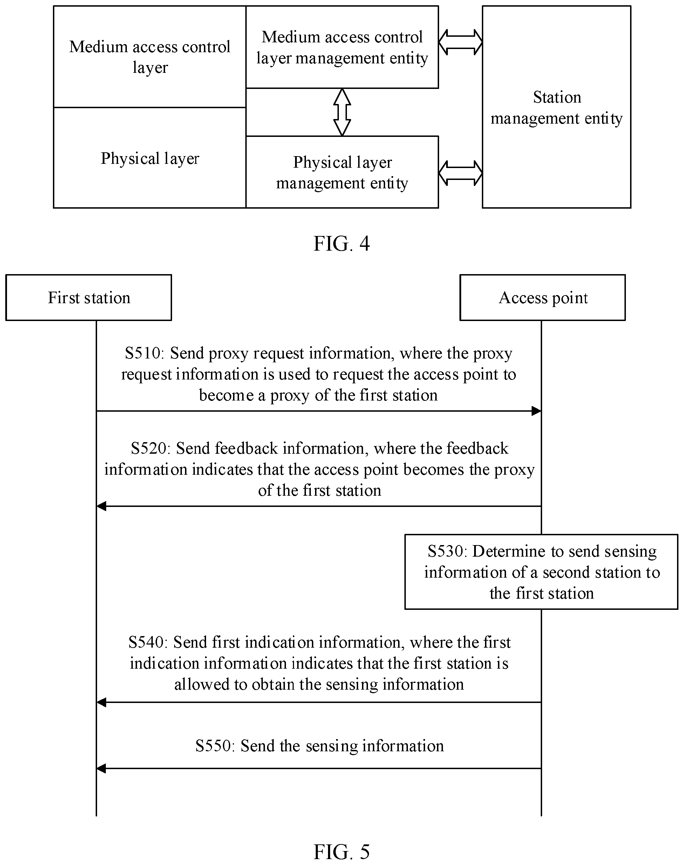

FIG. 4 is a schematic diagram of interaction of a plurality of entities according to this embodiment of this application. Specifically, in concept, a MAC sublayer and a physical (physical, PHY) layer each include a management entity. The MAC sublayer includes a MAC layer management entity (MAC layer management entity, MLME) and the physical layer includes a PHY layer management entity (PHY layer management entity, PLME). These entities provide layer management service interfaces through which layer management functions are invoked. There is an SME at each station, to provide a correct MAC operation. The SME is a layer-independent entity that resides in a separate management plane or on a side surface. Usually, the SME provides functions such as collecting a layer-related state from each layer management entity and similarly setting values of layer-specific parameters. The SME usually performs such functions on behalf of a general system management entity and implements standard management protocols. It should be understood that a MAC layer shown in FIG. 4 may further interact with an upper layer.

FIG. 5 shows still another data transmission method according to an embodiment of this application. In this technical solution, an access point determines to accept a first station to obtain sensing information of a second station. The method includes the following steps.

S510 and S520 are respectively the same as the foregoing steps S310 and S320.

S530: The access point determines to send the sensing information of the second station to the first station.

S540 and S550 are respectively the same as the foregoing steps S350 and S360.

Specifically, when determining whether to send the sensing information to the first station, the access point does not need to be accepted by the second station, and may accept, in place of the second station, the first station to obtain the sensing information.

It should be understood that in the step S530, the access point determines, in the following several manners, to send the sensing information of the second station to the first station:
#A: The access point determines that the second station has accepted the first station to obtain the sensing information of the second station.

Specifically, when determining that the second station has accepted the first station to obtain the sensing information of the second station, the access point may establish a correspondence between the second station and the first station, for example, <STA 1, STA 2>, where the STA 1 represents the first station, and the STA 2 represents the second station. The correspondence indicates that the first station is a trusted station of the second station.

Therefore, when the first station requests to obtain the sensing information again, the access point may directly accept, in place of the second station, the first station to obtain the sensing information.

In an example of the manner #A, there is a valid time period for the correspondence. In the valid time period, the access point directly accepts, in place of the second station, the first station to obtain the sensing information. Beyond the valid time period, the access point requests the second station to extend the valid time period of the correspondence, or the second station may determine whether to accept the first station to obtain the sensing information.

#B: The access point determines that first information included in first request information matches first information stored by the access point.

Specifically, when the second station sends the first information to the first station through the access point, the access point may store the first information.

Therefore, when the first station sends the first information to the second station through the access point, the access point determines whether the first information sent by the first station matches the first information stored by the access point. If the first information sent by the first station is consistent with the first information stored by the access point, the access point sends, to the first station, first indication information indicating that the first station is accepted to obtain the sensing information of the second station. If the first information sent by the first station is inconsistent with the first information stored by the access point, the access point sends, to the first station, first indication information indicating that the first station is rejected to obtain the sensing information of the second station.

It should be noted that verification information included in the first request information may be carried in the foregoing proxy request information, or may be determined by the AP.

According to the foregoing technical solution, in this embodiment of this application, when the access point becomes a proxy of a sensing by proxy requesting station, security of sensing information of a sensing by proxy responding station can be ensured.

The following describes another implementation for helping the second station and the access point accept the first station to obtain the sensing information of the second station.

For ease of description, the following uses an example in which the access point accepts the first station to obtain the sensing information of the second station. However, this manner is also applicable to a scenario in which the second station accepts the first station to obtain the sensing information of the second station.

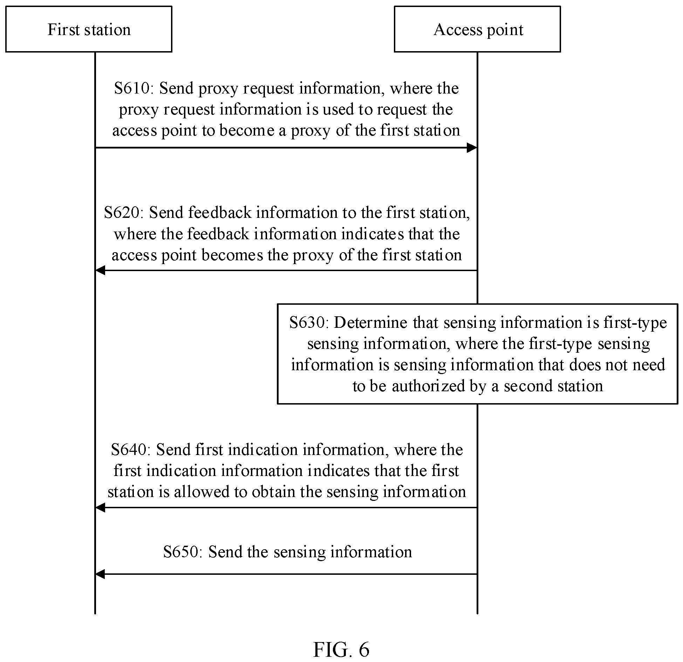

FIG. 6 shows yet another data transmission method according to an embodiment of this application. The method includes the following steps.

S610 and S620 are respectively the same as the foregoing steps S310 and S320.

S630: An access point determines that sensing information is second-type sensing information, where the second-type sensing information is sensing information that does not need to be authorized by a second station.

S640 and S650 are respectively the same as the foregoing steps S350 and S360.

It should be understood that the access point determines, based on a type of sensing information requested by the first station to be obtained, whether to accept the first station to obtain the sensing information of the second station.

For example, there are two types of sensing information of the second station:
(1) first-type sensing information, where the sensing information is sensing information that needs to be authorized by a second station; and
(2) second-type sensing information, where the sensing information is sensing information that does not need to be authorized by the second station.

For example, when the sensing information is CSI change information, the CSI change information is the second-type sensing information, and any station can obtain the sensing information without being authorized by the second station. When the sensing information is CSI information, the CSI information is the first-type sensing information, and only a station that is authorized or authenticated by the second station can obtain the sensing information.

It should be understood that the access point obtains type information of the sensing information through interaction with the second station. The interaction may occur:
#1: before a sensing session between the access point and the second station; or
#2: in a sensing session between the access point and the second station, where the interaction occurring in the sensing session includes:
   (a) a process of setting up the sensing session between the access point and the second station;
   (b) a process of setting up sensing measurement between the access point and the second station; or
   (c) a step which is not in an original measurement procedure (a step dedicated to exchanging the foregoing type information).

The access point determines, based on the type of the sensing information requested by the first station to be obtained, whether first request information needs to be sent to the second station. If the sensing information requested by the first station to be obtained is the second-type sensing information, the access point accepts the first station to obtain the sensing information. If the sensing information requested by the first station to be obtained is the first-type sensing information, the access point sends the first request information to the second station, and then the second station determines whether to accept the first station to obtain the sensing information of the second station. The sensing information is classified, so that in this embodiment of this application, the access point sends the first request information to the second station only when it is determined that the sensing information is of a type of requiring authorization. Therefore, in this embodiment of this application, a sensing by proxy procedure can be simplified.

It should be understood that, if the sensing information requested by the first station to be obtained is the first-type sensing information, in this embodiment of this application, the foregoing technical solution helps the first station obtain the sensing information of the first type.

It should be understood that the first-type sensing information may be understood as first feedback-type sensing information. The second-type sensing information may be understood as second feedback-type sensing information.

Similarly, the technical solution shown in FIG. 6 may also be applied to a scenario in which the second station determines, based on the type of the sensing information requested by the first station to be obtained, whether to accept the first station to obtain the sensing information. For specific content, refer to the foregoing content. Details are not described herein again.

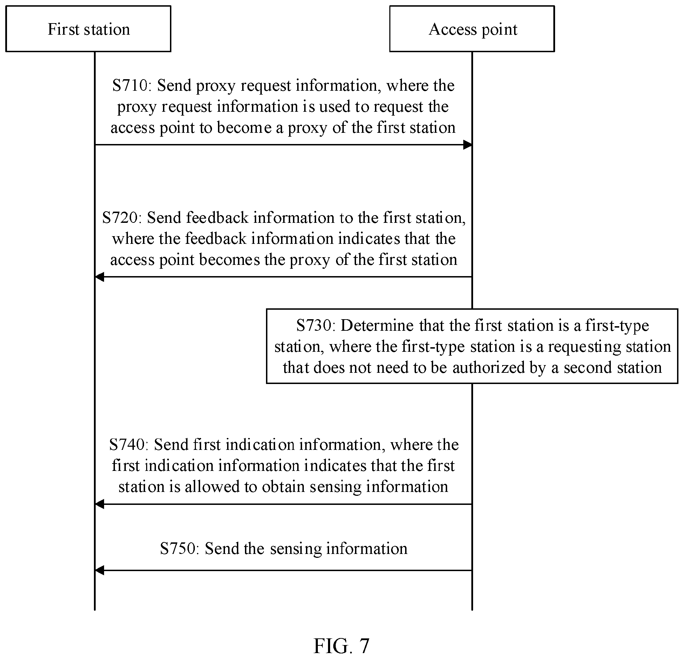

FIG. 7 shows still yet another data transmission method according to an embodiment of this application. The method includes the following steps.

S710 and S720 are respectively the same as the foregoing steps S310 and S320.

S730: An access point determines that a first station is a first-type station, where the first-type station is a requesting station that needs to be authorized by a second station.

S740 and S750 are respectively the same as the foregoing steps S350 and S360.

It should be understood that the access point determines, based on a type of the first station, whether to accept the first station to obtain sensing information. For example, there are two types of first stations: a first-type station and a second-type station, where the first-type station is a station that needs to be authorized (or accepted) by the second station, and the second-type station is a station that does not need to be authorized (or accepted) by the second station.

The second-type station may include:
#a: a station in a list stored by the access point;
#b: a station with a valid key;
#c: a station with valid identity information; and
#d: a sensing by proxy requesting station that performs mutual authentication with a sensing by proxy responding station.

The access point determines, based on the type of the first station, whether first request information needs to be sent to the second station. If the first station is the second-type station, the access point accepts the first station to obtain the sensing information. If the first station is the first-type station, the access point sends first request information to the second station, and then the second station determines whether to accept the first station to obtain the sensing information of the second station. The first stations are classified, so that in this embodiment of this application, the access point sends the first request information to the second station only when it is determined that the first station is of a type of requiring authorization. Therefore, in this embodiment of this application, a sensing by proxy procedure can be simplified.

The first stations are classified, so that in this embodiment of this application, there is no need to poll whether all "first stations" can perform transmission. For the first station that can perform direct transmission, the access point can perform direct transmission. This can simplify a sensing by proxy procedure.

It should be noted that, in addition to the foregoing enumerated stations, the second-type station may further include another type of station that is not described in this application.

It should be understood that, if the first station is a first-type requesting station, in this embodiment of this application, the foregoing technical solution helps the first station obtain the sensing information.

It should be understood that the classification of the first station may be directly specified by the access point, or the sensing by proxy responding station notifies, through interaction with the access point, the access point of the classification of the first station performed by the sensing by proxy responding station.

It should be further noted that, if the foregoing classification of the requesting station is performed by the access point, the access point may notify the second station and the first station of content of the classification of the first station. If the classification of the first station is performed by the second station, the second station may notify, through interaction with the access point, the access point of content of the classification of the first station performed by the second station.

Similarly, the technical solution shown in FIG. 7 may also be applied to a scenario in which the second station determines, based on the type of the first station, whether to accept the first station to obtain the sensing information. For specific content, refer to the foregoing content. Details are not described herein again.

It should be further noted that, the interaction processes, such as the classification of the sensing information and the classification of the first station, mentioned in FIG. 6 and FIG. 7 may occur before the step S210, the step S350, or the step S650.

It should be understood that the solutions shown in FIG. 6 and FIG. 7 may be combined. For example, if the first station is the first-type station, and the sensing information requested by the first station to be obtained is the first-type sensing information, the access point needs to send the first request information to the second station, and then the second station determines whether to accept the first station to obtain the sensing information of the second station.

For another example, if the first station is the first-type station, and the sensing information requested by the first station to be obtained is the second-type sensing information, the access point needs to send the first request information to the second station, and then the second station determines whether to accept the first station to obtain the sensing information of the second station.

For another example, if the first station is the second-type station, and the sensing information requested by the first station to be obtained is the first-type sensing information, the access point needs to send the first request information to the second station, and then the second station determines whether to accept the first station to obtain the sensing information of the second station.

For another example, if the first station is the second-type station, and the sensing information requested by the first station to be obtained is the second-type sensing information, the access point may directly accept the first station to obtain the sensing information of the second station.

According to the foregoing technical solution, in this embodiment of this application, there is no need to poll whether all "requesting stations" can perform transmission. For sensing information that can be directly transmitted, the access point directly transmits the sensing information to the first station when determining that the sensing information can be transmitted. This can simplify a sensing by proxy procedure.

It should be understood that, as described in the foregoing solution, the access point sends the sensing information of the second station to the first station, but the access point may send sensing information of a fourth station to the first station, or the access point sends the sensing information of the second station to a third station. This is described below.

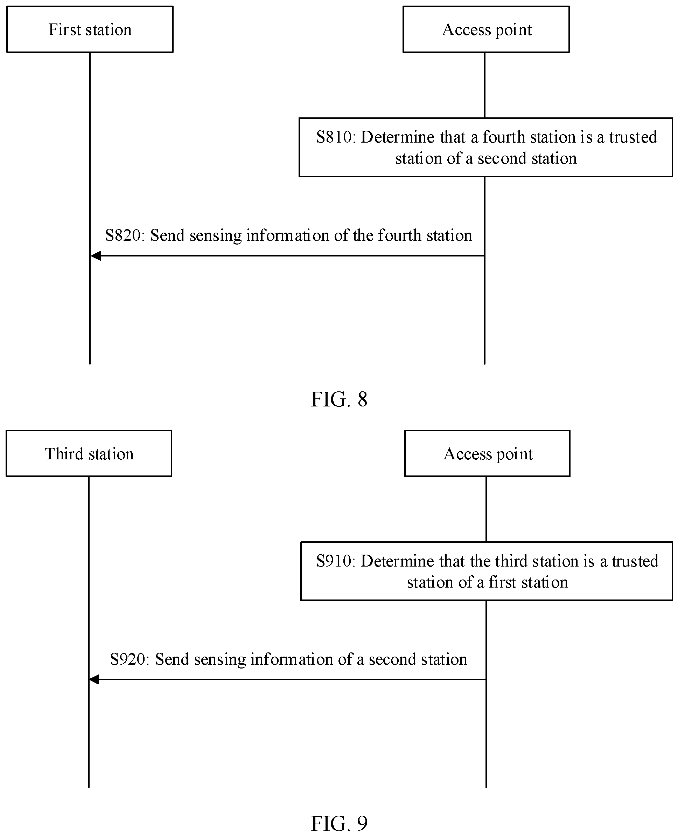

FIG. 8 shows a further data transmission method according to an embodiment of this application. The method includes the following steps.

S810: An access point determines that a fourth station is a trusted station of a second station.

S820: The access point sends sensing information of the fourth station to a first station.

It should be understood that the access point may determine, in a plurality of manners, that the fourth station is the trusted station of the second station. For example, the access point sends polling information #A to the second station, to poll whether the fourth station is the trusted station of the second station; and the second station sends indication information #D to the access point, to indicate that the fourth station is the trusted station of the second station. For another example, a plurality of confirm manners in the foregoing solution may be used. This is not limited in embodiments of this application.

It should be understood that, in this embodiment of this application, the foregoing solution may help the first station obtain sensing information of another sensing by proxy responding station, or the solution shown in FIG. 8 may help the first station obtain sensing information of another sensing by proxy responding station. According to the foregoing technical solution, in this embodiment of this application, sensing information of a trusted sensing by proxy responding station of the second station can be sent to the first station. This can simplify a proxy procedure in which the access point obtains the sensing information of the fourth station for the first station.

In an example, the access point sends a station list to the first station, where the station list includes at least one sensing by proxy responding station, and the station list includes the second station. In this way, the first station may request to obtain sensing information of another sensing by proxy responding station.

It should be understood that the station list sent by the access point to the first station may be sent at a request of the first station, or may be directly sent by the access point to the first station.

It should be further understood that, when there is a new sensing by proxy responding station, the station list may be being updated, and the access point may send a new station list to the first station after the station list is updated, or may send the new station list at the request of the first station. Therefore, the station list sent by the access point to the first station is a latest station list.

According to the foregoing technical solution, in this embodiment of this application, the first station can obtain sensing information of another sensing by proxy responding station through the access point.

FIG. 9 shows a still further data transmission method according to an embodiment of this application. The method includes the following steps.

S910: An access point determines that a third station is a trusted station of a first station.

S920: The access point sends sensing information of a second station to the third station.

It should be understood that the access point may determine, in a plurality of manners, that the third station is the trusted station of the first station. For example, the access point sends polling information #B to the first station, to poll whether the third station is the trusted station of the first station; and the first station sends indication information #E to the access point, to indicate that the third station is the trusted station of the first station. For another example, a plurality of confirm manners in the foregoing solution may be used. This is not limited in embodiments of this application.

It should be understood that in this embodiment of this application, the foregoing solution may help the third station obtain the sensing information of the second station, or the solution shown in FIG. 9 may help the third station obtain the sensing information of the second station.

According to the foregoing technical solution, in this embodiment of this application, the sensing information of the second station can be sent to a trusted sensing by proxy requesting station of the first station. This can simplify a proxy procedure in which the access point obtains the sensing information of the second station for the third station.

It should be noted that the solutions shown in FIG. 8 and FIG. 9 may be combined with any one of the foregoing solutions, to form a new technical solution. This is not specifically limited in embodiments of this application.

It should be understood that, unlike the foregoing description, if the second station does not accept the first station to obtain the sensing information of the second station, in this embodiment of this application, an SME or the like may be prohibited from obtaining sensing information obtained from a MAC/PHY layer, for example, information may be prohibited from being transferred to another layer through a PHY service access point (service access point, SAP), a MAC SAP, an MLME SAP, or the like. Therefore, in this embodiment of this application, on a premise that the second station rejects the first station to obtain the sensing information of the second station, the first station can be prevented from skipping an authorization mechanism at the PHY/MAC layer to obtain, through interaction with an upper layer, sensing information reported by the second station to another layer. Certainly, a stricter rule may be set, for example, it is specified that sensing information reported to another layer may be sent only to an authenticated and authorized requesting station.

It should be further understood that, in this embodiment of this application, the first station may be notified of the sensing information of the second station based on a variant long training field (long training field, LTF) sequence, that is, an LTF sequence used when the access point performs sensing measurement with the second station is an LTF sequence changed based on a sequence (for example, a key). In other words, non-conventional LTF sequence is used for the sensing measurement. When the access point sends the sensing information of the second station to the first station, the reported sensing information may be generated based on the variant LTF sequence, for example, a received frequency-domain signal. Because the first station learns of the variant LTF sequence, after learning of an LTF signal between the access point and the second station, the first station may obtain the sensing information of the second station through parsing, for example, CSI information.

An embodiment of this application further provides a data transmission method. The method includes the following steps.

S 1010: A first station sends key information #A corresponding to a first key to a second station, where the key information #A is used to verify an identity of the first station.

Correspondingly, the second station receives the key information #A from the first station.

That the first station sends the key information #A to the second station in the step S 1010 may be understood as that the first station directly sends the key information #A to the second station, or may be understood as that the first station sends the key information #A to the second station through an access point. This is not limited in embodiments of this application.

That the key information #A corresponds to the first key in the step S 1010 may be understood as that the key information #A is information, for example, encrypted information, obtained by the first station through encryption based on the first key; or may be understood as that the key information #A is information, for example, a hash value, generated by the first station based on the first key. In other words, the key information #A is information determined by the first station based on the first key.

S1020: The second station sends, to the first station, confirmation information #A determined based on the first key, where the confirmation information #A indicates that the second station confirms the identity of the first station.

Correspondingly, the first station receives the confirmation information #A from the second station, and determines, based on the confirmation information #A, that the second station confirms the identity of the first station.

That the second station sends the confirmation information #A to the first station in the step S1020 may be understood as that the second station directly sends the confirmation information #A to the first station, or may be understood as that the second station sends the confirmation information #A to the first station through the access point.

In an embodiment, the second station may directly send a unicast frame to the first station, or may send the unicast frame to the first station through the access point. For example, the confirmation information #A includes a unicast frame.

The confirmation information #A sent by the second station to the first station is confirmation information obtained after the second station verifies or decrypts the key information #A based on the first key. Both the second station and the first station have (learn of) the first key. In other words, the second station learns of the first key, and the first station learns of the first key.

In an embodiment, the first key includes at least one of the following: a public key #1, a public key #2, or a symmetric key #1.

In a possible implementation, the first key includes the public key #1, and the public key #1 corresponds to the first station (which indicates that the first station generates the public key #1 and a private key #1). The first station sends, to the second station, the key information #A corresponding to the public key #1. The second station has the public key #1 (which indicates that the first station sends the public key #1 to the second station), and the second station verifies or decrypts the key information #A based on the public key #1, to confirm the identity of the first station. For example, if the key information #A is a hash value, and the hash value corresponds to the public key #1, the second station verifies the hash value based on the public key #1 to determine the identity of the first station.

In a possible implementation, the first key includes the public key #2, and the public key #2 corresponds to the second station (which indicates that the second station generates the public key #2 and a private key #2). The first station has (learns of) the public key #2 (which indicates that the second station sends the public key #2 to the first station). The first station sends, to the second station, the key information #A corresponding to the public key #2. The second station verifies or decrypts the key information #A based on the public key #2, to confirm the identity of the first station. For example, if the key information #A is a hash value, and the hash value corresponds to the public key #2, the second station verifies the hash value based on the public key #2 to determine the identity of the first station.

In a possible implementation, the first key includes the public key #1 and the public key #2. Both the second station and the first station have (learn of) the public key #1 and the public key #2. The first station sends, to the second station, the key information #A corresponding to the public key #1 and the public key #2. The second station verifies or decrypts the key information #A based on the public key #1 and the public key #2, to confirm the identity of the first station. For example, if the key information #A is a hash value, and the hash value corresponds to the public key #1 and the public key #2, the second station verifies the hash value based on the public key #1 and the public key #2 to determine the identity of the first station.

In a possible implementation, the first key includes the symmetric key #1, and the symmetric key #1 corresponds to the first station and the second station. Both the second station and the first station have (learn of) the symmetric key #1. The first station sends, to the second station, the key information #A corresponding to the symmetric key #1. The second station verifies or decrypts the key information #A based on the symmetric key #1 (the first station sends the symmetric key #1 to the second station), to confirm the identity of the first station. For example, if the key information #Ais a hash value, and the hash value corresponds to the symmetric key #1, the second station verifies the hash value based on the symmetric key #1 to determine the identity of the first station.

The first station sends, to the second station, the key information for verifying the identity of the first station, and the second station verifies the key information based on the first key. After the verification succeeds, the first station can directly exchange information with the second station in this embodiment of this application. For example, the first station directly obtains sensing information of the second station or the like. After the verification succeeds, information security in a process of information exchange between the first station and the second station can be ensured in this embodiment of this application.

In addition, according to the foregoing solution, in this embodiment of this application, the first station become a trusted station of the second station, which is associated with the foregoing solution. Therefore, it can be ensured that the sensing information of the second station can be obtained by the trusted station, to ensure security of the sensing information of the second station.

In addition, the key information included in the first information mentioned above may include the key information #A mentioned in the step S1010, or may include the first key mentioned in the step S1010.

The method further includes the following step.

S1030: The first station and the second station perform mutual authentication.

When the first station and the second station perform mutual authentication, some algorithms may be used, for example, Diffie-Hellman (Diffie-Hellman, DH), so that the first station proves that the first station has the private key #1 corresponding to the public key #1, and the second station proves that the second station has the private key #2 corresponding to the public key #2, or the first station and the second station prove that the first station and the second station have the symmetric key #1.

In a possible implementation, the first station and the second station may obtain or determine a second key when performing mutual authentication according to the DH algorithm or another algorithm. The second key is used in a process of future mutual authentication between the first station and the second station.

For example, the first station has the public key #1 and the private key #1, and the second station has the public key #2 and the private key #2. The first station sends the public key #1 to the second station, and the second station sends the public key #2 to the first station. The first station and the second station may perform an operation based on respective private keys, the public key #1, and the public key #2, return obtained values to each other, and then may perform an operation based on respective private keys to obtain a common K value of the first station and the second station. The value may prove that the first station and the second station each have a corresponding private key, and the value may be used for subsequent communication. The value may be used as the second key. For the description of the DH algorithm, refer to the conventional technology. Details are not described herein again.

In a possible implementation, the second station sends the second key to the first station. Correspondingly, the first station receives the second key from the second station.

Specifically, in a process of mutual authentication between the first station and the second station, the second station may generate the second key. If the second key includes a public key and a private key, the second station may send the public key in the second key to the first station, so that in a process of subsequent information exchange between the first station and the second station, the first station may indicate the identity to the second station based on the public key in the second key. If the second key includes a symmetric key #2, the second station may send the symmetric key #2 to the first station, so that in a process of subsequent information exchange between the first station and the second station, the first station may indicate the identity to the second station based on the symmetric key #2. Therefore, in this embodiment of this application, the information security in the process of information exchange between the first station and the second station can be further ensured.

In another possible implementation, the first station sends the second key to the second station. Correspondingly, the second station receives the second key from the first station.

Specifically, in a process of mutual authentication between the first station and the second station, the first station may generate the second key. If the second key includes a public key and a private key, the first station may send the public key in the second key to the second station, so that in a process of subsequent information exchange between the first station and the second station, the second station may indicate the identity to the first station based on the public key in the second key. If the second key includes a symmetric key #2, the first station may send the symmetric key #2 to the second station, so that in the process of subsequent information exchange between the first station and the second station, the second station may indicate the identity to the second station based on the symmetric key #2. Therefore, in this embodiment of this application, the information security in the process of information exchange between the first station and the second station can be further ensured.

The method further includes the following steps.

S 1000: The second station establishes a secure connection to the access point.

For example, when the second station establishes a relationship with the access point through robust security network association (robust security network association, RSNA) or preassociation security negotiation (preassociation security negotiation, PASN), the second station notifies the access point that the second station may participate in an SBP process as a sensing station.

For example, the second station may also indicate, in another interaction process with the access point, that the second station may participate in an SBP process as a sensing station.

The second station may alternatively authorize, in the foregoing process, the access point to notify another station of information that the second station is a sensing station.

S 1002: The access point sends indication information #F to the first station, where the indication information #F indicates that the second station is the sensing station.

Correspondingly, the first station receives the indication information #F sent by the access point, and determines, based on the indication information #F, that the second station is the sensing station.

For example, the access point indicates, to the first station by using a periodic beacon frame (beacon frame), that the second station is the sensing station. In other words, the indication information #F may be a beacon frame, or may be another type of information, for example, a broadcast frame. Alternatively, the first station actively polls the access point about a related sensing station of the first station, and obtains a reply in a reply of the access point.

In a possible implementation, the access point indicates, to the first station based on the indication information #F, information such as the access point supporting sensing and/or supporting becoming a proxy access point.

S 1004: The first station sends proxy sensing registration request information #A to the access point, where the proxy sensing registration request information #A indicates a proxy sensing registration request of the first station.

Correspondingly, the access point receives the proxy sensing registration request information #A sent by the first station.

After the first station determines that the second station is the sensing station, the first station wants to obtain the sensing information of the second station, and the first station may send, to the access point, a request information frame, for example, probe request information (probe request), to indicate, to the access point, that the first station wants to obtain the sensing information of the second station.

In a possible implementation, before the first station sends the proxy sensing registration request information #A to the access point, the first station needs to establish a secure connection to the access point, for example, complete the secure connection to the access point in the foregoing RSNA or PASN process. After the first station establishes the secure connection to the access point, a pairwise transient key (pairwise transient key, PTK) is obtained. The first station and the access point may perform mutual authentication based on the PTK, to ensure information security.

In a possible implementation, the first station generates a key #1, and the key #1 includes a public key #1 and a private key #1. This step may be performed before S1004. The proxy sensing registration request information #A includes the public key #1.

In another possible implementation, the first station generates a key #1, and the key #1 includes a symmetric key #1. This step may be performed before S1004. The proxy sensing registration request information #A includes the symmetric key #1.

For example, the proxy sensing registration request information #A sent by the first station to the access point may be a proxy sensing registration frame (proxy sensing registration request frame). The first station completes proxy sensing registration on the access point by using the proxy sensing registration frame, that is, requests, by using the proxy sensing registration frame, the access point to become a sensing by proxy station of the first station.

In a possible implementation, the access point sends confirmation information #B to the first station, where the confirmation information #B indicates that the access point becomes the sensing by proxy station of the first station.

For example, the confirmation information #B may be a proxy sensing registration response frame. The frame may indicate that the first station successfully (success) registers at the access point, that is, may indicate to the first station that the access point becomes the sensing by proxy station of the first station.

S1006: The access point sends sensing by proxy request information #A to the second station, where the sensing by proxy request information #A indicates that the first station requests to obtain the sensing information of the second station.

Specifically, the sensing by proxy request information #A includes a public key #1 or a symmetric key #1.

Correspondingly, the second station receives the sensing by proxy request information #A sent by the access point, and obtains the public key #1 or the symmetric key #1 of the first station.

The step S1006 may also be understood as that the second station receives the public key #1 or the symmetric key #1 from the access point. If the key information #A corresponds to the public key #1 or the symmetric key #1, the second station may verify the key information #A based on the public key #1 or the symmetric key #1.

In a possible implementation, before the access point sends the sensing by proxy request information #A to the second station, the access point needs to determine the second station or the sensing station, that is, determine that the second station may further participate in the SBP process. The access point may send a broadcast request frame to the second station to complete the confirm process, and the second station replies with a response frame after receiving the request frame.

As mentioned above, the first station generates the key #1, and the key #1 includes the public key #1 and the private key #1. The second station also generates the key #2, and the key #2 includes the public key #2 and the private key #2. When the key #1 generated by the first station includes the symmetric key #1, the second station does not need to generate the key #2.

In a possible implementation, the response frame sent by the second station to the access point includes the public key #2.

In a possible implementation, the second station may allow the access point to send the public key #2 to the first station.

For example, after determining that the second station is still the sensing station, the access point sends the sensing by proxy request information #A to the second station, where the sensing by proxy request information #A indicates that the first station requests to obtain the sensing information of the second station, and the sensing by proxy request information #A includes the public key #1 or the symmetric key #A.

In a possible implementation, the access point may send the sensing by proxy request information #A to the second station without determining that the second station is still the sensing station, where the sensing by proxy request information #A includes the public key #1 or the symmetric key #A.

S1008: The second station sends response information #A to the access point, where the response information #A indicates that the second station accepts the first station to obtain the sensing information of the second station.

Optionally, the access point sends the sensing information of the second station to the first station, and correspondingly, the first station receives the sensing information of the second station.

In a possible implementation, when the second station generates the key #2, the response information #A includes the public key #2.

In a possible implementation, the second station allows the access point to send the public key #2 to the first station, and the access point sends the public key #2 to the first station. Therefore, the first station receives the public key of at least one sensing station.

In the foregoing steps S 1006 and S 1008, the first station may receive the public key #2 of the second station sent by the access point.

In steps S1004 to S 1008, in this embodiment of this application, when the first station and the second station respectively generate keys, and each key includes a public key and a private key, the first station sends the public key #1 to the second station, and the second station sends the public key #2 to the first station, so that the second station sends the confirmation information #A to the first station based on the first key in the step S 1020. Alternatively, in this embodiment of this application, the first station sends the symmetric key #1 generated by the first station to the second station, so that the second station sends the confirmation information #A to the first station based on the first key in the step S 1020, to complete confirmation of the identity of the first station.

According to the foregoing technical solution, in this embodiment of this application, after the first station obtains the sensing information of the second station, the mutual authentication procedure can be completed between the first station and the second station, so that the identity of the first station and an identity of the second station are known to both parties. In this way, information security of the first station and/or the second station can be ensured in the process of subsequent information exchange between the first station and the second station.

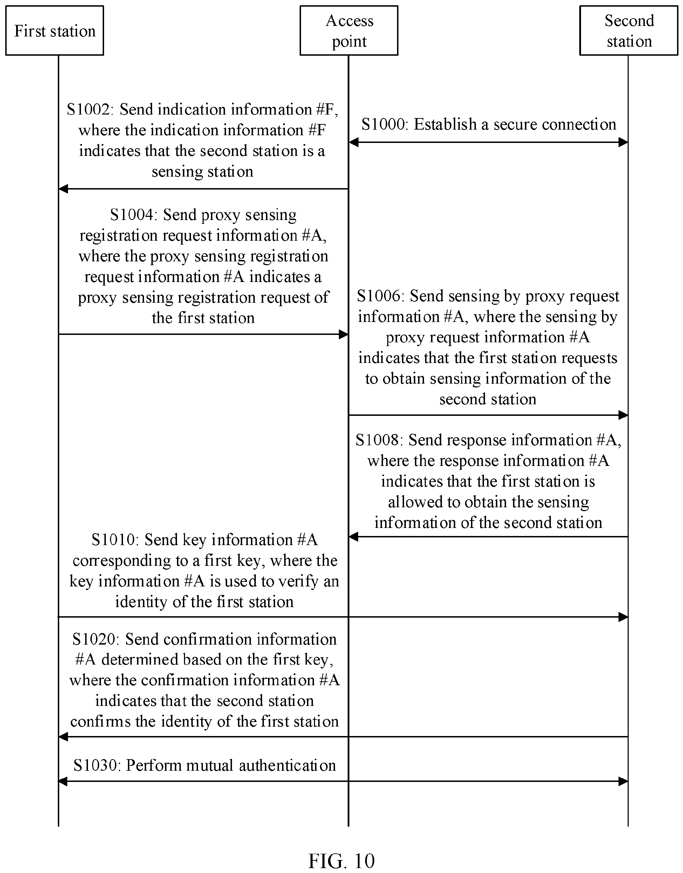

It should be understood that the technical solution shown in FIG. 10 may be combined with the foregoing technical solution to form a new technical solution. In addition, the technical solution shown in FIG. 10 is associated with the foregoing solution.

For example, when the first request information includes the key information #A, the second station may determine, based on the first key, that the first station is a trusted station of the second station, and may accept the first station to obtain the sensing information of the second station. In other words, the first station may become the trusted station of the second station in this manner in steps S1010 and S1020 in FIG. 10.

Sequences of steps and sub-steps (possible implementations) in the solution in FIG. 10 may be exchanged or changed, the sub-steps may be moved to another step, or some sub-steps may be omitted or added. This is not limited in embodiments of this application.

In addition, the solution in FIG. 10 provides a sensing proxy authentication manner under an asymmetric key and a symmetric key, may be extended based on the foregoing two processes, and is not limited to fully following the foregoing steps.

The foregoing describes the method embodiments in embodiments of this application, and the following describes corresponding apparatus embodiments.

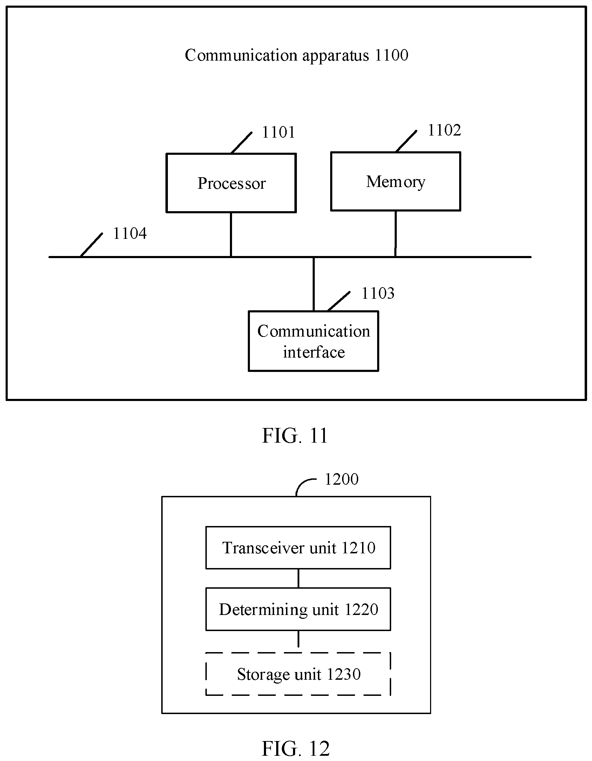

FIG. 11 is a schematic diagram of a communication apparatus according to an embodiment of this application. The communication apparatus includes a processor 1101, a memory 1102, and a communication interface 1103. The processor 1101, the memory 1102, and the communication interface 1103 are connected to each other through a bus 1104. It should be understood that the communication apparatus shown in FIG. 11 may be an access point, or may be a station.

The memory 1102 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1102 is configured to store related instructions and related data.

The processor 1101 may be one or more central processing units (central processing units, CPUs). When the processor 901 is one CPU, the CPU may be a single-core CPU, or may be a multi-core CPU.

When the communication apparatus is the access point, the processor 1101 in the communication apparatus is configured to read program code stored in the memory 1102, to perform the following operations:
First indication information is sent to a first station through the communication interface. The first indication information indicates that the first station is accepted to obtain sensing information of a second station. The sensing information is sent to the first station through the communication interface.

When the communication apparatus is the station, the processor 1101 in the communication apparatus is configured to read program code stored in the memory 1102, to perform the following operations:
First request information sent by an access point is received through the communication interface. The first request information is used to request to obtain sensing information of a second station for a first station. The access point is a proxy of the first station, the proxy is configured to obtain the sensing information for the first station, the first station is a sensing by proxy requesting station, and the second station is a sensing by proxy responding station. Second indication information is sent to a node through the communication interface. The second indication information indicates that the first station is accepted to obtain the sensing information.

In addition, for implementation of each operation in FIG. 11, refer to the corresponding description of the method embodiments shown in FIG. 2 to FIG. 9.

FIG. 12 is a schematic diagram of another communication apparatus according to an embodiment of this application. The communication apparatus is used in an access point, or may be used in a station, and may be configured to implement the method in the foregoing embodiment. The communication apparatus includes a transceiver unit 1201 and a determining unit 1220. The following describes the transceiver unit 1210 and the determining unit 1220.

When the communication apparatus is the access point, the transceiver unit 1210 is configured to send first indication information and sensing information to a first station. The determining unit 1220 is configured to perform actions such as decision-making and determining in the foregoing method embodiment, for example, determining a type of the sensing information, or determining a type of the first station.

When the communication apparatus is the station, the transceiver unit 1210 is configured to receive first request information sent by an access point and send second indication information to a reception point. The determining unit 1220 is configured to perform actions such as decision-making and determining in the foregoing method embodiment, for example, determining a type of sensing information, or determining a type of a first station.

Optionally, the communication apparatus further includes a storage unit 1230, and the storage unit is configured to store a program or code used to perform the foregoing method.

In addition, for implementation of each operation in FIG. 12, refer to the corresponding description of the method shown in the foregoing embodiment. Details are not described herein again.

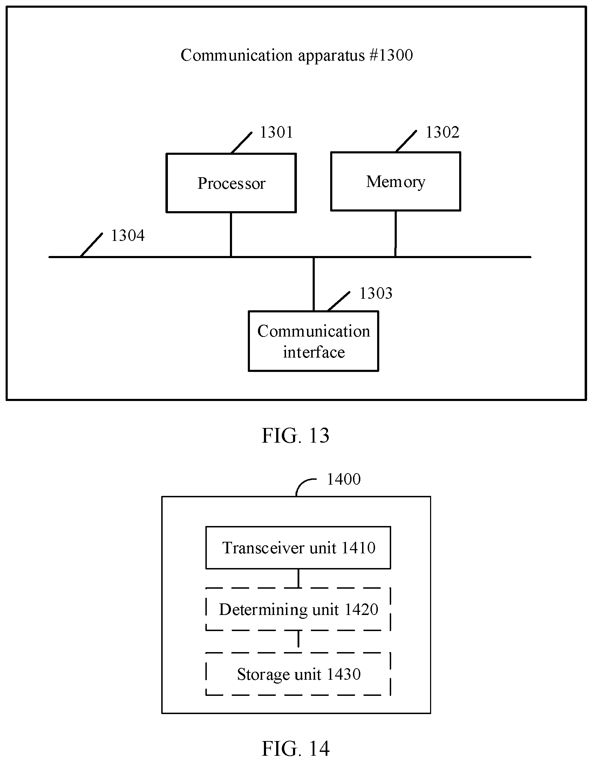

FIG. 13 is a schematic diagram of still another communication apparatus according to an embodiment of this application. The communication apparatus includes a processor 1301, a memory 1302, and a communication interface 1303. The processor 1301, the memory 1302, and the communication interface 1303 are connected to each other through a bus 1304. The communication apparatus shown in FIG. 13 may be a first station, or may be a second station.

The memory 1302 includes but is not limited to a RAM, a ROM, an EPROM, or a CD-ROM. The memory 1302 is used for related instructions and related data.

The processor 1301 may be one or more CPUs. When the processor 1301 is one CPU, the CPU may be a single-core CPU, or may be a multi-core CPU.

When the communication apparatus is the second station, the processor 1301 in the communication apparatus is configured to read program code stored in the memory 1302, to perform the following operations:

Key information #A, corresponding to a first key, from the first station is received through the communication interface. The key information #A is used to verify an identity of the first station. Confirmation information #A determined based on the first key is sent to the first station through the communication interface. The confirmation information #A indicates that the second station confirms the identity of the first station.

When the communication apparatus is the first station, the processor 1301 in the communication apparatus is configured to read program code stored in the memory 1302, to perform the following operations:
Key information #A corresponding to the first key is sent to the second station through the communication interface. The key information #A is used to verify an identity of the first station. Confirmation information determined based on the first key that is from the second station is received through the communication interface. The confirmation information #A indicates that the second station confirms the identity of the first station.

In addition, for implementation of each operation in FIG. 13, refer to the corresponding description of the method embodiment shown in FIG. 10.

FIG. 14 is a schematic diagram of yet another communication apparatus according to an embodiment of this application. The communication apparatus is used in a first station, or may be used in a second station, and may be configured to implement the method in the foregoing embodiment. The communication apparatus includes a transceiver unit 1401. The following describes the transceiver unit 1410.

When the communication apparatus is the second station, the transceiver unit 1410 is configured to receive key information, corresponding to a first key, from the first station, where the key information is used to verify an identity of the first station. The transceiver unit 1410 is further configured to send, to the first station, confirmation information #A determined based on the first key, where the confirmation information #A indicates that the second station confirms the identity of the first station.

Optionally, the second station further includes a determining unit 1420. The determining unit 1420 is configured to determine the confirmation information #A based on the first key. The determining unit 1220 is configured to perform actions such as decision-making and determining in the foregoing method embodiment.

Optionally, the communication apparatus further includes a storage unit 1430, and the storage unit is configured to store a program or code used to perform the foregoing method.

When the communication apparatus is the first station, the transceiver unit 1410 is configured to send key information corresponding to a first key to the second station, where the key information is used to verify an identity of the first station. The transceiver unit 1410 is further configured to receive, from the second station, confirmation information #A determined based on the first key, where the confirmation information #A indicates that the second station confirms the identity of the first station.

Optionally, the second station further includes a determining unit 1420. The determining unit 1420 is configured to perform actions such as decision-making and determining in the foregoing method embodiment.

Optionally, the communication apparatus further includes a storage unit 1430, and the storage unit is configured to store a program or code used to perform the foregoing method.

In addition, for implementation of each operation in FIG. 14, refer to the corresponding description of the method embodiment shown in FIG. 10.

An embodiment of this application further provides a chip, including a processor, configured to invoke, from a memory, instructions stored in the memory and run the instructions, to enable a communication device on which the chip is installed to perform the methods in the foregoing examples.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform the methods in the foregoing examples.

An embodiment of this application further provides a processor, configured to be coupled to a memory, and configured to perform the method and the function that are related to a satellite or user equipment in any one of the foregoing embodiments.

Another embodiment of this application provides a computer program product. When the computer program product runs on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

In the descriptions of embodiments of this application, the term "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the expression such as "example" or "for example" is used to represent giving an example, an illustration, or description.

Any embodiment or design scheme described as an "example" or "for example" in embodiments of this application should not be explained as being more preferred or having more advantages than another embodiment or design scheme. Exactly, use of the expressions such as "example" and "for example" is intended to present a relative concept in a specific manner for ease of understanding.

Unless otherwise specified, "/" in the descriptions of embodiments of this application represents an "or" relationship between associated objects. For example, A/B may represent A or B. In this application, "and/or" represents only an association relationship for describing associated objects and represents that three relationships may exist. For example, A and/or B may represent the following three cases: Only A exists, both A and B exist, and only B exists. A and B may be singular or plural.

It should be understood that "one embodiment" or "an embodiment" mentioned in the entire specification means that particular features, structures, or characteristics related to the embodiment are included in at least one embodiment of this application.

Therefore, "in one embodiment" or "in an embodiment" appearing throughout the specification does not necessarily refer to a same embodiment. In addition, these particular features, structures, or characteristics may be combined in one or more embodiments in any appropriate manner. Sequence numbers of the foregoing processes do not mean execution sequences in embodiments of this application. The execution sequences of the processes should be determined based on functions and internal logic of the processes, and should not be construed as any limitation on the implementation processes of embodiments of this application.

It may be understood that "an embodiment" mentioned in the entire specification means that particular features, structures, or characteristics related to the embodiment are included in at least one embodiment of this application.

Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for ease and brevity of description, for a detailed working process of foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate. Parts displayed as units may or may not be physical units, in other words, may be located in one location, or may be distributed on a plurality of network units. Some or all of the units may be selected based on an actual requirement to achieve the objectives of the solutions of embodiments. In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A data transmission method, comprising:
sending, by an access point, first indication information to a first station, wherein the first indication information indicates that the access point accepts the first station to obtain sensing information of a second station; and
sending, by the access point, the sensing information to the first station, wherein
the access point is a proxy of the first station, the proxy is configured to obtain the sensing information for the first station, the first station is a sensing by proxy requesting station, and the second station is a sensing by proxy responding station.

2. The method according to claim 1, wherein before the sending, by an access point, first indication information to a first station, the method further comprises:
sending, by the access point, first request information to the second station, wherein the first request information is used to request to obtain the sensing information for the first station; and
receiving, by the access point, second indication information sent by the second station, wherein the second indication information indicates that the second station accepts the first station to obtain the sensing information.

3. The method according to claim 2, wherein the first request information comprises verification information of the first station, and the verification information indicates an identity of the first station.

4. The method according to claim 2 or 3, wherein the method further comprises:
receiving, by the access point, first information sent by the second station, wherein the first information indicates that the first station is a trusted station of the second station; and
sending, by the access point, the first information to the first station.

5. The method according to any one of claims 2 to 4, wherein before the sending, by the access point, first request information to the second station, the method further comprises:
determining, by the access point, that the sensing information is first-type sensing information, wherein the first-type sensing information is sensing information that needs to be authorized by the second station; and/or
determining, by the access point, that the first station is a first-type station, wherein the first-type station is a station that needs to be authorized by the second station.

6. The method according to claim 1, wherein before the sending, by an access point, first indication information to a first station, the method further comprises:
receiving, by the access point, third indication information sent by the second station, wherein the third indication information indicates that the second station accepts any station to obtain the sensing information.

7. The method according to claim 1, wherein before the sending, by an access point, first indication information to a first station, the method further comprises:
determining, by the access point, that the sensing information is second-type sensing information, wherein the second-type sensing information is sensing information that does not need to be authorized by the second station; and/or
determining, by the access point, that the first station is a second-type station, wherein the second-type station is a station that does not need to be authorized by the second station.

8. The method according to any one of claims 1 to 7, wherein after the sending, by the access point, the sensing information to the first station, the method further comprises:
determining, by the access point, that a third station is a trusted station of the first station; and
sending, by the access point, the sensing information to the third station, wherein
the access point is a proxy of the third station, the proxy is configured to obtain the sensing information for the third station, and the third station is a sensing by proxy requesting station.

9. The method according to claim 8, wherein the determining, by the access point, that a third station is a trusted station of the first station comprises:
sending, by the access point, first polling information to the first station, wherein the first polling information is used to poll whether the third station is the trusted station of the first station; and
receiving, by the access point, fourth indication information sent by the first station, wherein the fourth indication information indicates that the third station is the trusted station of the first station.

10. The method according to any one of claims 1 to 7, wherein after the sending, by the access point, the sensing information to the first station, the method further comprises:
determining, by the access point, that a fourth station is a trusted station of the second station; and
sending, by the access point, sensing information of the fourth station to the first station, wherein
the proxy is further configured to obtain the sensing information of the fourth station for the first station, and the fourth station is a sensing by proxy responding station.

11. The method according to claim 10, wherein the determining, by the access point, that a fourth station is a trusted station of the second station comprises:
sending, by the access point, second polling information to the second station, wherein the second polling information is used to poll whether the fourth station is the trusted station of the second station; and
receiving, by the access point, fifth indication information sent by the second station, wherein the fifth indication information indicates that the fourth station is the trusted station of the second station.

12. The method according to any one of claims 1 to 11, wherein the method further comprises:
sending, by the access point, a station list to the first station, wherein the station list comprises at least one sensing by proxy responding station, and the station list comprises the second station.

13. The method according to claim 12, wherein the method further comprises:
sending, by the access point, sensing information of any sensing by proxy responding station in the station list to the first station.

14. A data transmission method, comprising:
receiving, by a second station, first request information sent by an access point, wherein the first request information is used to request to obtain sensing information of the second station for a first station; and
sending, by the second station, second indication information to the access point, wherein the second indication information indicates that the second station accepts the first station to obtain the sensing information, and
the access point is a proxy of the first station, the proxy is configured to obtain the sensing information for the first station, the first station is a sensing by proxy requesting station, and the second station is a sensing by proxy responding station.

15. The method according to claim 14, wherein the first request information comprises verification information of the first station, and the verification information indicates an identity of the first station.

16. The method according to claim 15, wherein before the sending, by the second station, second indication information to the access point, the method further comprises:
determining, by the second station based on the verification information of the first station, that the first station is a trusted station of the second station.

17. The method according to any one of claims 14 to 16, wherein before the sending, by the second station, second indication information to the access point, the method further comprises:
determining, by the second station, that the sensing information is first-type sensing information, wherein the first-type sensing information is sensing information that needs to be authorized by the second station; and/or
determining, by the second station, that the first station is a first-type station, wherein the first-type station is a requesting station that needs to be authorized by the second station.

18. The method according to any one of claims 14 to 17, wherein before the sending, by the second station, second indication information to the access point, the method further comprises:
receiving, by the second station, sixth indication information sent by a station management entity of the second station, wherein the sixth indication information indicates that the second station accetps the first station to obtain the sensing information.

19. The method according to claim 14, wherein before the sending, by the second station, second indication information to the access point, the method further comprises:
determining, by the second station, that the sensing information is second-type sensing information, wherein the second-type sensing information is sensing information that does not need to be authorized by the second station; and/or
determining, by the second station, that the first station is a second-type station, wherein the second-type station is a requesting station that does not need to be authorized by the second station.

20. The method according to any one of claims 14 to 19, wherein the method further comprises:
sending, by the second station, first information to the access point, wherein the first information indicates that the first station is the trusted station of the second station.

21. The method according to any one of claims 14 to 20, wherein the method further comprises:
receiving, by the second station, second polling information sent by the access point, wherein the second polling information is used to poll whether a fourth station is a trusted station of the second station; and
sending, by the second station, fifth indication information to the access point, wherein the fifth indication information indicates that the fourth station is the trusted station of the second station.

22. A communication apparatus, comprising:
a transceiver unit, configured to send first indication information to a first station, wherein the first indication information indicates that the apparatus accepts the first station to obtain sensing information of a second station;
the transceiver unit is further configured to send the sensing information to the first station; and
the communication apparatus is a proxy of the first station, the proxy is configured to obtain the sensing information for the first station, the first station is a sensing by proxy requesting station, and the second station is a sensing by proxy responding station.

23. The apparatus according to claim 22, wherein
the transceiver unit is further configured to send first request information to the second station, wherein the first request information is used to request to obtain the sensing information for the first station; and
the transceiver unit is further configured to receive second indication information sent by the second station, wherein the second indication information indicates that the second station accepts the first station to obtain the sensing information.

24. The apparatus according to claim 23, wherein the first request information comprises verification information of the first station, and the verification information indicates an identity of the first station.

25. The apparatus according to claim 23 or 24, wherein
the transceiver unit is further configured to receive first information sent by the second station, wherein the first information indicates that the first station is a trusted station of the second station; and
the transceiver unit is further configured to send the first information to the first station.

26. The apparatus according to any one of claims 23 to 25, wherein the apparatus further comprises a determining unit;
the determining unit is configured to determine that the sensing information is first-type sensing information, wherein the first-type sensing information is sensing information that needs to be authorized by the second station; and/or
the determining unit is configured to determine that the first station is a first-type station, wherein the first-type station is a station that needs to be authorized by the second station.

27. The apparatus according to claim 22, wherein
the transceiver unit is further configured to receive third indication information sent by the second station, wherein the third indication information indicates that the second station accepts any station to obtain the sensing information.

28. The apparatus according to claim 22, wherein the apparatus further comprises a determining unit;
the determining unit is configured to determine that the sensing information is second-type sensing information, wherein the second-type sensing information is sensing information that does not need to be authorized by the second station; and/or
the determining unit is configured to determine that the first station is a second-type station, wherein the second-type station is a station that does not need to be authorized by the second station.

29. The apparatus according to any one of claims 22 to 28, wherein the apparatus further comprises the determining unit;
the determining unit is configured to determine that a third station is a trusted station of the first station;
the transceiver unit is further configured to send the sensing information to the third station; and
the apparatus is a proxy of the third station, the proxy is configured to obtain the sensing information for the third station, and the third station is a sensing by proxy requesting station.

30. The apparatus according to claim 29, wherein
the transceiver unit is further configured to send first polling information to the first station, wherein the first polling information is used to poll whether the third station is the trusted station of the first station; and
the transceiver unit is further configured to receive fourth indication information sent by the first station, wherein the fourth indication information indicates that the third station is the trusted station of the first station.

31. The apparatus according to any one of claims 22 to 28, wherein the apparatus further comprises the determining unit;
the determining unit is configured to determine that a fourth station is a trusted station of the second station;
the transceiver unit is further configured to send sensing information of the fourth station to the first station; and
the proxy is further configured to obtain the sensing information of the fourth station for the first station, and the fourth station is a sensing by proxy responding station.

32. The apparatus according to claim 31, wherein
the transceiver unit is further configured to send second polling information to the second station, wherein the second polling information is used to poll whether the fourth station is the trusted station of the second station; and
the transceiver unit is further configured to receive fifth indication information sent by the second station, wherein the fifth indication information indicates that the fourth station is the trusted station of the second station.

33. The apparatus according to any one of claims 22 to 32, wherein
the transceiver unit is further configured to send a station list to the first station, wherein the station list comprises at least one sensing by proxy responding station, and the station list comprises the second station.

34. The apparatus according to claim 33, wherein
the transceiver unit is further configured to send sensing information of any sensing by proxy responding station in the station list to the first station.

35. A communication apparatus, comprising:
a transceiver unit, configured to receive first request information sent by an access point, wherein the first request information is used to request to obtain sensing information of a second station for a first station;
the transceiver unit is further configured to send second indication information to the access point, wherein the second indication information indicates that the apparatus accepts the first station to obtain the sensing information, and
the access point is a proxy of the first station, the proxy is configured to obtain the sensing information for the first station, the first station is a sensing by proxy requesting station, and the second station is a sensing by proxy responding station.

36. The apparatus according to claim 35, wherein the first request information comprises verification information of the first station, and the verification information indicates an identity of the first station.

37. The apparatus according to claim 36, wherein the apparatus further comprises a determining unit; and
the determining unit is configured to determine, based on the verification information of the first station, that the first station is a trusted station of the second station.

38. The apparatus according to any one of claims 35 to 37, wherein the apparatus further comprises the determining unit;
the determining unit is configured to determine that the sensing information is first-type sensing information, wherein the first-type sensing information is sensing information that needs to be authorized by the second station; and/or
the determining unit is configured to determine that the first station is a first-type station, wherein the first-type station is a requesting station that needs to be authorized by the second station.

39. The apparatus according to any one of claims 35 to 38, wherein
the transceiver unit is further configured to receive sixth indication information sent by a station management entity of the second station, wherein the sixth indication information indicates that the second station accepts the first station to obtain the sensing information.

40. The apparatus according to claim 35, wherein the apparatus further comprises a determining unit;
the determining unit is configured to determine that the sensing information is second-type sensing information, wherein the second-type sensing information is sensing information that does not need to be authorized by the second station; and/or
the determining unit is configured to determine that the first station is a second-type station, wherein the second-type station is a requesting station that does not need to be authorized by the second station.

41. The apparatus according to any one of claims 35 to 40, wherein
the transceiver unit is further configured to send first information to the access point, wherein the first information indicates that the first station is the trusted station of the second station.

42. The apparatus according to any one of claims 35 to 41, wherein
the transceiver unit is further configured to receive second polling information sent by the access point, wherein the second polling information is used to poll whether a fourth station is a trusted station of the second station; and
the transceiver unit is further configured to send fifth indication information to the access point, wherein the fifth indication information indicates that the fourth station is the trusted station of the second station.

43. A computer-readable storage medium, comprising a computer program or instructions, wherein when the computer program or the instructions are run on a computer, the computer is enabled to perform the method according to any one of claims 1 to 21.

44. A computer program product, comprising instructions, wherein when the instructions are run on a computer, the computer is enabled to perform the method according to any one of claims 1 to 21.
